# EUROPEAN PATENT APPLICATION

(11) **EP 2 657 908 A1**
(43) Date of publication of application: **30.10.2013**
(21) Application number: 11850862.1
(22) Date of filing: 18.03.2011
(51) Int. Cl.: G06T 7/00

(54) **IMAGE AUTHENTICATION APPARATUS, IMAGE PROCESSING SYSTEM, CONTROL PROGRAM FOR IMAGE AUTHENTICATION APPARATUS, COMPUTER-READABLE RECORDING MEDIUM, AND IMAGE AUTHENTICATION METHOD**

(30) Priority: 21.12.2010 JP 2010284576
(71) Applicant: Omron Corporation, Kyoto-shi, Kyoto 600-8530 (JP)
(72) Inventor: IRIE, Atsushi, Kyoto-shi, Kyoto 6008530 (JP); SAKAI, Shun, Kyoto-shi, Kyoto 6008530 (JP); MURAKAMI, Tatsuya, Kyoto-shi, Kyoto 6008530 (JP)
(74) Representative: Barth, Stephan Manuel
(86) International application number: PCT/JP2011/056616
(87) International publication number: WO 2012/086222

(57) **Abstract**

To achieve an objective of implementing authentication with high precision, even when image-capturing conditions differ among registered images, an image authentication apparatus (1) of the present invention has registered images (R) obtained by capturing images of people, and image-capturing conditions pertaining to the faces of the people in the registered images (R) registered in association with each other in a registered image database (21), and is provided with: a face-information data estimation unit (33) for estimating face-information data of an inputted image (A1); a weighting determination unit (34) for determining weighting in accordance with the similarities between face-information data of registered images (R) and the face-information data of the inputted image (A1); an authentication score calculation unit (35) for calculating authentication scores between the inputted image (A1) and the registered images (R); a weighted authentication-score calculation unit (36) for applying, to the authentication scores, weighting determined for the corresponding registered images (R); and an authentication result output unit (37) for verifying the inputted image (A1) on the basis of the weighted authentication scores.

## Description

### TECHNICAL FIELD

The present invention relates to an image authentication apparatus that authenticates an image in which an object is photographed by checking the image in an image database, an image processing system, a control program for image authentication apparatus, a computer-readable recording medium, and an image authentication method.

### BACKGROUND ART

Conventionally, in a well-known face authentication technology, an image in which a face of a person is photographed is previously registered in a database and, in inputting an image to be authenticated in which a face of a person is photographed, the inputted image is compared to a registered content of the database to identify the person.

The authentication processing in the face authentication technology is more specifically described as follows. During the registration, a feature quantity indicating a feature of the face of the person is extracted from the image in which the face of the person is photographed, and the feature quantity is registered. During the authentication, the feature quantity is extracted from the inputted image. The feature quantity extracted from the inputted image is compared to the feature quantity registered in the database.

In the field of the face authentication technology, there is a demand to reduce false recognition as much as possible to improve authentication accuracy. Therefore, various technologies have been proposed.

For example, in a technology proposed in Patent Document 1, a plurality of images are registered in time series, and a weight coefficient is calculated based on a photographing time difference between the oldest registered image and other registered images. That is, in the technology of Patent Document 1, weighting of the latest registered image is increased while weighting of the older registered image is decreased. Weighted mean is performed to the feature quantities of the registered images based on the coefficients, the feature quantity of the registered image relatively recently registered is emphasized in the authentication.

For example, Patent Document 2 proposes a technology of performing the weighting based on a physical feature or an external feature of a registered person. Specifically, Patent Document 2 describes the weighting based on height data and existence or non-existence of glasses of the registered person.

### Citation List

### Patent Documents

Patent Document 1: Japanese Unexamined Patent Publication No. 2008-129830 (Publication date: June 5, 2008)
Patent Document 2: Japanese Unexamined Patent Publication No. 2009-64173 (Publication date: March 26, 2009)

### SUMMARY OF THE INVENTION

### PROBLEMS TO BE SOLVED BY THE INVENTION

However, when the compared images differ from each other in a photographing condition, there is a risk of falsely recognizing the image in which the person in question is photographed as the image of a stranger. Additionally, when the compared images are identical to each other in the photographing condition, there is a risk of falsely recognizing the image in which the stranger is photographed as the image of the person in question.

During the authentication, in addition to the height, there are many kinds of feature quantities that can be used as the comparison target. Sometimes a plurality of images are registered with respect to a certain person.

These points cannot be considered in the conventional technology. Specifically, there are following problems.

In Patent Document 1, because the weighted mean is performed using only the time information, differences of an expression and a facial orientation are not considered, which results in the risk of the false recognition. For example, there is a fear of falsely recognizing the latest image of a certain person photographed with smile as the image of the stranger photographed with smile.

In Patent Document 2, the weighting is not performed to the plurality of registered images of one registered person. In the case that the plurality of registered images are registered with respect to one registered person, it is conceivable that the differences of the exterior and environment and unlikeness of the expression exist in the photographed registered person. However, Patent Document 2 does not propose any technique of dealing with the differences of the exterior and environment and the unlikeness of the expression.

The present invention has been devised to solve the problems described above, and an object thereof is to construct an image authentication apparatus that can accurately perform authentication even if the registered images differ from each other in the photographing condition in the case that the plurality of images are registered with respect to the registered person.

### MEANS FOR SOLVING THE PROBLEM

In order to solve the above problems, an image authentication apparatus that authenticates an object photographed in an inputted image by checking the inputted image in a registered image database, a registered image obtained by photographing the object and a photographing condition relating to the object of the registered image being registered in the registered image database while correlated with each other, the image authentication apparatus includes: inputted image photographing condition acquisition means for acquiring the photographing condition relating to the object of the inputted image; registered image photographing condition acquisition means for acquiring the photographing condition of the registered image stored in the registered image database; weighting determination means for determining weighting corresponding to closeness between the photographing condition of the registered image and the photographing condition of the inputted image; similarity calculation means for calculating a degree of similarity between the inputted image and the registered image; weighting application means for applying the degree of similarity calculated by the similarity calculation means to the weighting determined with respect to the corresponding registered image; and image authentication means for checking the inputted image based on the degree of similarity to which the weighting is applied.

In order to solve the above problems, an image authentication method for authenticating an object photographed in an inputted image by checking the inputted image in a registered image database, the image authentication method includes: an inputted image photographing condition acquisition step of acquiring the photographing condition relating to the object of the inputted image; a registered image photographing condition acquisition step of acquiring the photographing condition of the registered image by referring to the registered image database, in which a registered image obtained by photographing the object and a photographing condition with respect to the object of the registered image are stored while correlated with each other; a weighting step of determining weighting corresponding to closeness between the photographing condition of the registered image and the photographing condition of the inputted image; a similarity calculation step of calculating a degree of similarity between the inputted image and the registered image; a weighting application step of applying the degree of similarity calculated by the similarity calculation means to the weighting determined with respect to the corresponding registered image; and an image authentication step of checking the inputted image based on the degree of similarity to which the weighting is applied.

As used herein, checking the inputted image in the registered image database means processing of specifying which one of the objects registered in the registered image database is included in the inputted image by determining the degree of similarity between the inputted image and the registered image or processing of selecting a candidate specifying the inputted image.

For example, the degree of similarity means what is called an authentication score that is obtained by comparing a feature quantity extracted from the inputted image and a feature quantity extracted from the registered image.

The object means a body, such as a person and a vehicle, in which a pattern can be recognized. The object may be part of a certain object. For example, when the object is a person, the face of the person can be cited as an example of part of a certain object.

According to the configuration, the photographing condition of the inputted image is acquired, and the photographing condition of the registered image is acquired from the registered image database.

As used herein, the photographing condition relates to the object, and means an environment or a state in photographing the object. The photographing condition in photographing the object includes a condition relating to the environment during the photographing and a condition relating to the state of the object that becomes a subject.

In the case that the object is the person, a facial orientation of the person, namely, an orientation of photographing means such as a camera with respect to the person can be cited as an example of the condition relating to the environment during the photographing. A facial expression, orientation/intensity of lighting, a degree of oblique light, and a degree of shade can also be cited as the condition relating to the environment during the photographing.

Conditions, such as an estimated age and a sex of the person, which can be estimated from an exterior of the person, can be cited as the condition relating to the state of the person that becomes the subject.

The photographing condition may take a continuous value with predetermined accuracy or may be a classification indicating which categorized condition the photographing condition belongs to.

A photographing angle of the object can be cited as an example of the continuous value. For example, the angle of the facial orientation can be cited in the case that the object is the person. In this case, the angle may be an integral value. In the case that the integral value of the angle is used as the photographing condition, actually the value may be set with accuracy of "each 5 degrees", or discrete values such as "15 degrees, 20 degrees, 25 degrees, ..." may be set. Alternatively, the angle may have the accuracy of the number of decimal places.

In the case that the object is the person, the sex of the person and a rough orientation of the face can be cited as an example of the classification. The rough orientation of the face means the classification indicating the front view, the view facing right, or the view facing left.

The photographing condition may be extracted from the image in which the object is photographed by a well-known algorithm, or manually be input.

In the configuration, for example, the weighting is determined based on the closeness between the photographing condition of the registered image and the photographing condition of the inputted image. The closeness of the photographing condition means the closeness of the angle in the case of the angle of the facial orientation of the person. The closeness of the photographing condition may previously be defined in the case of the rough orientation of the face. For example, a relationship between the right view and the front view may be defined to be closer than a relationship between the left view and the right view.

In the configuration, the photographing condition of the registered image is acquired to calculate the weighting and the degree of similarity in each object. The weighting is applied to the degree of similarity of the registered image to perform the checking in the registered image database.

During the checking, the weighting emphasizes the registered image having the photographing condition closer to the photographing condition of the inputted image. On the other hand, during the checking, the weighting weakens an influence on the registered image having the photographing condition farther from the photographing condition of the inputted image.

As a result, the possibility of falsely recognizing the object photographed on a certain photographing condition as another object due to the existence of the registered image, which is registered with respect to the object photographed on the photographing condition identical or similar to the certain photographing condition, can be reduced.

From the other view point, the fear of incorrectly performing the authentication due to the difference between the photographing condition of the inputted image and the photographing condition of the registered image even if the object of the inputted image is identical to the object of the registered image can be reduced.

### EFFECT OF THE INVENTION

In order to solve the above problem, the image authentication apparatus of the present invention that authenticates an object photographed in an inputted image by checking the inputted image in a registered image database, a registered image obtained by photographing the object and a photographing condition relating to the object of the registered image being registered in the registered image database while correlated with each other, the image authentication apparatus includes: inputted image photographing condition acquisition means for acquiring the photographing condition relating to the object of the inputted image; registered image photographing condition acquisition means for acquiring the photographing condition of the registered image stored in the registered image database; weighting determination means for determining weighting corresponding to closeness between the photographing condition of the registered image and the photographing condition of the inputted image; similarity calculation means for calculating a degree of similarity between the inputted image and the registered image; weighting application means for applying the degree of similarity calculated by the similarity calculation means to the weighting determined with respect to the corresponding registered image; and image authentication means for checking the inputted image based on the degree of similarity to which the weighting is applied.

In order to solve the problem, the image authentication method of the present invention for authenticating an object photographed in an inputted image by checking the inputted image in a registered image database, the image authentication method includes: an inputted image photographing condition acquisition step of acquiring the photographing condition relating to the object of the inputted image; a registered image photographing condition acquisition step of acquiring the photographing condition of the registered image by referring to the registered image database, in which a registered image obtained by photographing the object and a photographing condition with respect to the object of the registered image are stored while correlated with each other; a weighting step of determining weighting corresponding to closeness between the photographing condition of the registered image and the photographing condition of the inputted image; a similarity calculation step of calculating a degree of similarity between the inputted image and the registered image; a weighting application step of applying the degree of similarity calculated by the similarity calculation step to the weighting determined with respect to the corresponding registered image; and an image authentication step of checking the inputted image based on the degree of similarity to which the weighting is applied.

Therefore, the false recognition of the identical object as the different object or the false recognition of the different object as the identical object due to the difference between the photographing condition of the inputted image and the photographing condition of the registered image can be prevented.

Other objects, features, and advantageous points of the present invention will be sufficiently apparent from the following description. The advantages of the present invention will be apparent from the following description taken in connection with the accompanying drawings.

### BRIEF DESCRIPTION OF THE DRAWINGS

Fig. 1 is a functional block diagram illustrating a schematic configuration of a face authentication apparatus according to one embodiment of the present invention.
Fig. 2 is a view illustrating a data structure of registered-people information.
Fig. 3 is a flowchart illustrating a flow of face image registration processing in the face authentication apparatus.
Fig. 4 is a flowchart illustrating a flow of face image authentication processing in the face authentication apparatus.
Fig. 5 is a view illustrating a working example of authentication in which a weighted authentication score is used.
Fig. 6 is a functional block diagram illustrating each functional unit included in a weighting determination unit.
Fig. 7 is a flowchart illustrating a flow of weighting determination processing of each registered image in the face authentication apparatus.
Fig. 8 is a view illustrating a working example of the weighting determination processing of each registered image.
Fig. 9 is a flowchart illustrating another example of the flow of the weighting determination processing of each registered image in the weighting determination unit.
Fig. 10 is a functional block diagram illustrating a schematic configuration of a face authentication apparatus according to another embodiment of the present invention.
Fig. 11 is a flowchart illustrating a flow of the face image registration processing in the face authentication apparatus.
Fig. 12 is a flowchart illustrating a flow of the face image authentication processing in the face authentication apparatus.
Fig. 13 is a view illustrating a working example of the face image registration processing and face image authentication processing in the face authentication apparatus.
Fig. 14 is a functional block diagram illustrating a configuration example of a registered image selection unit.
Fig. 15 is a flowchart illustrating a detail of "processing of selecting the registered image using face-information data".
Fig. 16 is a view illustrating a working example of the "processing of selecting the registered image using the face-information data" of the configuration example.
Fig. 17 is a functional block diagram illustrating another configuration example of the registered image selection unit.
Fig. 18 is a functional block diagram illustrating a schematic configuration of a face authentication apparatus according to still another embodiment of the present invention.
Fig. 19 is a functional block diagram illustrating a detailed configuration example of a registered image selection unit.
Fig. 20 is a flowchart illustrating a flow of face image registration processing in the face authentication apparatus.
Fig. 21 is a flowchart illustrating a detail of "processing of selecting the registered images by the number of selections using the face-information data".
Fig. 22 is a view illustrating a working example of the face image registration processing and face image authentication processing in the face authentication apparatus.
Fig. 23 is a flowchart illustrating a detail of the "processing of selecting the registered images by the number of selections using the face-information data".
Fig. 24 is a view illustrating a working example of the "processing of selecting the registered images by the number of selections using the face-information data".

### MODE FOR CARRYING OUT THE INVENTION

### [First embodiment]

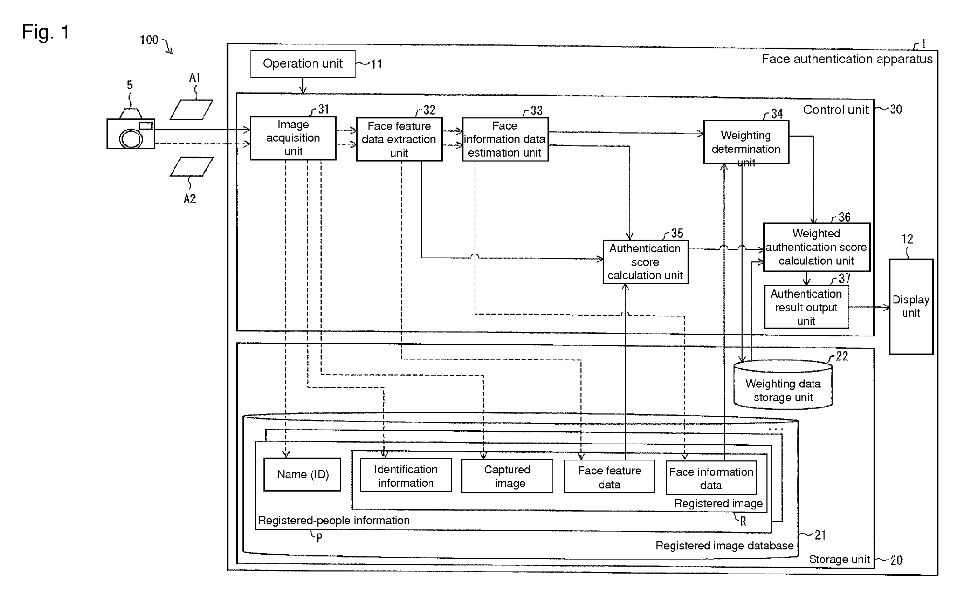

A face authentication apparatus according to one embodiment of the present invention will be described with reference to Figs. 1 to 9.

As illustrated in Fig. 1, face authentication system (an image processing system) 100 includes a face authentication apparatus (an authentication apparatus) 1 and an image input apparatus 5.

The face authentication apparatus (the image authentication apparatus) 1 is an apparatus that authenticates an image input from the image input apparatus 5. Authentication processing in the face authentication apparatus 1 includes two procedures of "face image registration processing" and "face image authentication processing". First, in the "face image registration processing", the image used in the authentication is registered in the face authentication apparatus 1. Then, in the "face image authentication processing", the authentication is performed by checking the inputted image against the registered image.

As used herein, for example, the term of "authentication" means processing of specifying a person by checking a face of a person photographed in the inputted image against a face of a person photographed in one of registered images.

The image input apparatus 5 is an apparatus that inputs a photographed image in which the face of the person is photographed to the face authentication apparatus 1. For example, the image input apparatus 5 can be constructed by a digital camera that generates the image by photographing the face of the person that is of a subject.

Hereinafter, it is assumed that the face of the person is photographed in the photographed image. However, the photographing subject is not limited to the face of the person. That is, the target subject can arbitrarily be selected. Hereinafter, as needed basis, the photographed image input to the face authentication apparatus 1 for the purpose of the registration in the "face image registration processing" is referred to as a "registration target image A2", and the photographed image input to the face authentication apparatus 1 for the purpose of an authentication target in the "face image authentication processing" is referred to as an "inputted image A1" in distinction from the "registration target image A2". The "inputted image A1" and the "registration target image A2" are simply referred to as the "photographed image" unless otherwise distinguished.

### (Face authentication apparatus)

Various configurations of the face authentication apparatus 1 will be described below with reference to Fig. 1. As illustrated in Fig. 1, the face authentication apparatus 1 includes an operation unit 11, a display unit 12, a storage unit 20, and a control unit 30.

The operation unit 11 receives various inputs from a user, and is constructed by an input button, a keyboard, a numerical keypad, a pointing device such as a mouse, a touch panel, and other input devices. The operation unit 11 generates operation data according to a received user's operation, and transmits the generated operation data to the control unit 30.

The display unit 12 performs screen display in order to provide information to the user. The display unit 12 displays various pieces of information such as characters and the image on a display screen based on a screen data received from the control unit 30. The display unit 12 is constructed by a display device such as an LCD (Liquid Crystal Display), a PDP (Plasma Display Panel), an EL (Electroluminescence) display.

Various pieces of data and programs are stored in storage unit 20. Examples of a configuration of the storage unit 20 include a nonvolatile storage device such as a hard disk, a ROM (Read Only Memory) that is of a read-only semiconductor memory in which a program used to operate the control unit 30 or a fixed data used in various kinds of control is stored, a RAM (Random Access Memory) that is of what is called a working memory in which data used in calculation and calculation result are temporarily stored, a rewritable nonvolatile memory (for example, a flash memory) in which various pieces of setting data are stored. The detailed storage unit 20 is described later.

The control unit 30 wholly controls various functions in the face authentication apparatus 1. A control function of the control unit 30 is implemented in a manner such that a processing device such as a CPU (Central Processing Unit) executes a control program. For example, the control program may be stored in the storage unit 20 that is of a storage element such as a RAM and a flash memory, or the control program installed in a hard disk or the like may be read and used. The detailed control unit 30 is described later.

### (Detailed storage unit)

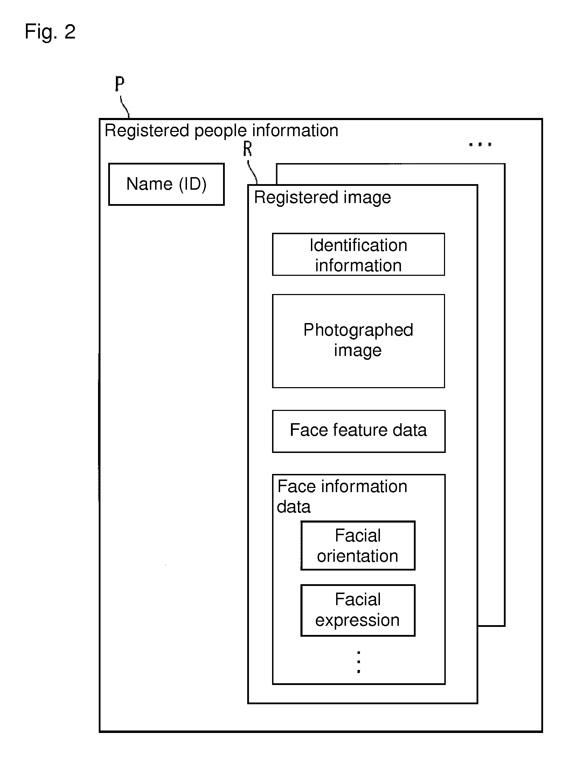

The detailed storage unit 20 will be described below with reference to Figs. 1 and 2. As illustrated in Fig. 1, the storage unit 20 includes a registered image database 21 and a weighting data storage unit 22.

The image used in the authentication is registered in the registered image database 21 on a person-by-person basis. A specific registration content of the registered image database 21 is illustrated as follows.

As illustrated in Fig. 1, a plurality of pieces of registered-people information P are registered in the registered image database 21.

The detailed registered-people information P will be described below with reference to Fig. 2. Fig. 2 is a view illustrating an example of a data structure of the registered-people information P.

As illustrated in Fig. 2, by way of example, the registered-people information P can be identified while a name (ID) of the registered person is added thereto. A plurality of registered images R are registered in the registered-people information P.

The registered image R includes the image used in the authentication and related information thereof. Specifically, the registered image has the data structure including the photographed image, face feature data, and face-information data. The registered image R is identified with identification information.

A registration target image A2 is stored in the photographed image. Additionally an image, such as a thumbnail, in which the image A2 is processed, may be stored in the photographed image. For example, the registration target image A2, to which image processing such as filter processing is performed, may be stored in the photographed image. The photographed image may be eliminated from the data structure of the registered-people information P.

A feature quantity indicating a feature of the face of the person included in the photographed image is stored in the face feature data. In the feature quantity, a region that is recognized as the whole face, an eye, a nose, or a mouth in the face of the person included in the photographed image is quantified. Examples of the feature quantity include luminance information, frequency characteristic information, and information in which a shape, a position, and a size of each region are digitized.

A state of the face of the person in taking the photographed image and various pieces of information indicating an environment and the photographing condition are included as an item in the face-information data. That is, the pieces of information indicating the photographing condition and the like, which can be acquired by analyzing the face of the person included in the photographed image, are included as the item in the face-information data. Specifically, as illustrated in Fig. 2, a "facial orientation" and a "facial expression" can be cited as an example of the item of the face-information data. Although not illustrated in Fig. 2, a "smile intensity", a "lighting condition", and an "oblique light angle" can also be cited as the item of the face-information data.

For example, a value that can be set to the face-information data is a continuous value having predetermined accuracy or a classification indicating which one of the categorized conditions the face information belongs to.

In the case that the item is the "facial orientation", the continuous value and the classification are exemplified as follows.

An angle of the facial orientation can be cited as an example of the continuous value. In this case, the angle may be an integral value. For example, the angle of 0 degree expresses the facial orientation when the face is straightforwardly photographed, the angle of 90 degrees expresses the facial orientation when the face is photographed from the left side surface, and the angle of -90 degrees expresses the facial orientation when the face is photographed from the right side surface. That is, the sign expresses the orientation, the value without the sign (or the positive sign) expresses left, and the negative sign expresses right. In this case, for example, the angle can take the value such as "0 degree, 1 degree, 2 degrees, ...".

Thus, in the case that the integral value of the angle is used as the photographing condition, actually the integral value may be set with accuracy of "each 15 degrees", or take discrete values such as "0 degree, 15 degrees, 30 degrees, ...". Alternatively, the angle may have the accuracy of the number of decimal places.

The rough orientation of the face can be cited as an example of the classification. The rough orientation of the face means the classification indicating the front view, the view facing right, or the view facing left. In this case, for example, the front view expresses the facial orientation in the range of "-45 degrees to +45 degrees", the view facing the right expresses the facial orientation in the range of "-135 degrees to -45 degrees", and the view facing the left expresses the facial orientation in the range of "45 degrees to 135 degrees".

The "facial orientation" may express not only right and left but also up and down. For example, the "facial orientation" can be implemented by data expression of two sets in which a first element expresses right and left while a second element expresses up and down. Specifically, the data expression is (0,10).

In the case that the item is the "facial expression", the continuous value and the classification are exemplified as follows. A numerical value indicating a degree of smiling face can be cited as an example of the continuous value. That is, the numerical value takes a small value for the expressionless face, and takes a large value as the face changes from a smile to the smiling face. Hereinafter the numerical value is also referred to as the "smile intensity". As to the classification, the smile intensity is divided by a predetermined range into divisions, and "expressionless", "smile", and "smiling face" are allocated to the divisions.

In the case that the item is the "lighting condition", the continuous value and the classification are exemplified as follows. An angle of a light incident direction can be cited as an example of the continuous value. A continuous value indicating a degree of lighting can be cited as an example of the continuous value (hereinafter, particularly the degree of lighting is also referred to as the "oblique light angle"). The rough orientation of the light incident direction can be cited as an example of the classification. The light incident direction is similar to the "facial orientation", the description is omitted.

Various pieces of information such as an "age", a "sex", and an "eye opening way" can also be used as the item.

### (Detailed control unit)

The detailed control unit 30 will be described below with reference to Fig. 1. As illustrated in Fig. 1, the control unit 30 includes an image acquisition unit 31, a face feature data extraction unit 32, a face-information data estimation unit (the inputted image photographing condition acquisition means and the registered image photographing condition acquisition means) 33, a weighting determination unit (the weighting determination means) 34, an authentication score calculation unit (the similarity calculation means) 35, a weighted authentication-score calculation unit (the weighting application means) 36, and an authentication result output unit (the image authentication means) 37.

Each unit included in the control unit 30 performs the "face image registration processing" and the "face image authentication processing", which are included in the authentication processing in the face authentication apparatus 1.

The "face image registration processing" is performed by the image acquisition unit 31, the face feature data extraction unit 32, and the face-information data estimation unit 33.

The "face image authentication processing" is performed by the image acquisition unit 31, the face feature data extraction unit 32, the face-information data estimation unit 33, the weighting determination unit 34, the authentication score calculation unit 35, the weighted authentication-score calculation unit 36, and the authentication result output unit 37.

In Fig. 1, a broken-line arrow connecting the units indicates a flow of the data, control, or the like in the "face image registration processing", and a solid-line arrow connecting the units indicates a flow of the data, control, or the like in the "face image authentication processing".

Each unit included in the control unit 30 will be described below.

The image acquisition unit 31 acquires the photographed image from the image input apparatus 5 in response to the input operation of the operation unit 11. The image acquisition unit 31 transfers the acquired photographed image to the face feature data extraction unit 32. In the "face image registration processing", the image acquisition unit 31 acquires the name (ID) input from the operation unit 11, and registers the registration target image A2 as the registered image R of the registered-people information P on the acquired name (ID) in the registered image database 21, and transfers the registration target image A2 to the face feature data extraction unit 32.

The image acquisition unit 31 registers the registered image R of the registration target in the registered image database 21 while allocating the identification information to the registered image R. The image acquisition unit 31 may automatically generate the identification information to allocate the identification information to the registered image R, or allocate the identification information to the registered image R by acquiring the identification information input from the operation unit 11.

In the case that the person photographed in the registration target image A2 is already registered in the registered image database 21, the authentication processing may be performed to automatically specify the registered person based on the registered image registered in the registered image database 21. In the "face image authentication processing", the image acquisition unit 31 transfers an inputted image A1 to the face feature data extraction unit 32.

The face feature data extraction unit 32 extracts face feature data that is of the feature quantity of each region of the face by analyzing the face of the person included in the photographed image. In the "face image registration processing", the face feature data extraction unit 32 stores the face feature data extracted from the registration target image A2 in the face feature data of the registered image R of the registration target, and transfers the registration target image A2 to the face-information data estimation unit 33.

In the "face image authentication processing", the face feature data extraction unit 32 transfers the inputted image A1 to the face-information data estimation unit 33, and transmits the face feature data extracted from the inputted image A1 to the authentication score calculation unit 35.

The face-information data estimation unit 33 analyzes the photographed image to estimate various states such as a face state during the photographing, and generates face-information data indicating estimated various states. There is no particular limitation to the technique in which the face-information data estimation unit 33 estimates various states, but any well-known technology may be adopted.

In the "face image registration processing", the face-information data estimation unit 33 stores the face-information data generated from the registration target image A2 in the face-information data of the registered image R of the registration target.

In the "face image authentication processing", the face-information data estimation unit 33 transmits the face-information data generated from the inputted image A1 to the weighting determination unit 34, and transfers the control to the authentication score calculation unit 35.

The weighting determination unit 34 determines a weight with respect to an authentication score calculated by the authentication score calculation unit 35. The weighting determination unit 34 stores the identification information on the registered image and the corresponding weight in the weighting data storage unit 22 while correlating the identification information on the registered image and the corresponding weight with each other. A weight determination technique of the weighting determination unit 34 is described in detail later.

The authentication score calculation unit 35 performs matching between the inputted image and the registered image to calculate the authentication score indicating a degree of approximation between the inputted image and the registered image. Specifically, the authentication score calculation unit 35 calculates the authentication score by comparing the face feature data of the inputted image to each of the pieces of face feature data of the plurality of registered images registered with respect to each person. There is no particular limitation to the authentication score calculation method, but any well-known technology may be adopted.

The weighted authentication score calculation unit 36 calculates a weighted authentication score in which the weight determined by the weighting determination unit 34 is applied to each authentication score calculated by the authentication score calculation unit 35. That is, the weighted authentication score calculation unit 36 reads the weight determined by the weighting determination unit 34 from the weighting data storage unit 22, and the weighted authentication score calculation unit 36 calculates the weighted authentication score by applying the weight to each authentication score calculated by the authentication score calculation unit 35.

By way of example, the weighted authentication score calculation unit 36 calculates the weighted authentication score to which the weighted mean is performed to the authentication scores. A detailed process of calculating the weighted authentication score is described later.

The authentication result output unit 37 authenticates the inputted image A1 based on the weighted authentication score calculated by the weighted authentication score calculation unit 36, and outputs an authentication result to the display unit 12. The authentication result output unit 37 may output the name of the specified person as the authentication result, or output the typical photographed image together with the name.

### (Flow of face image registration processing)

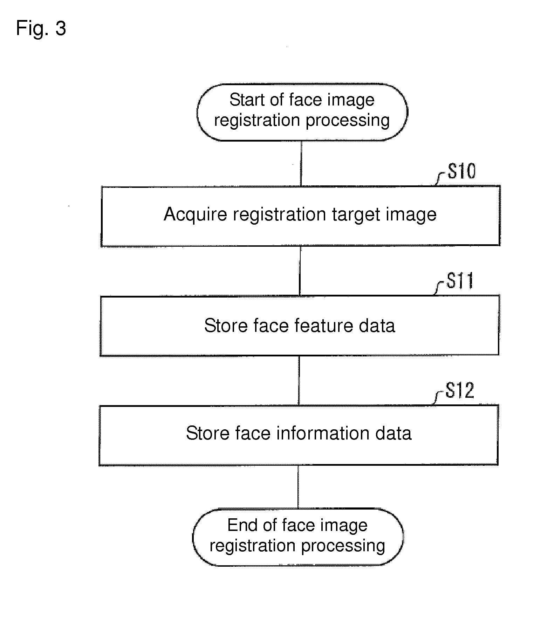

A flow of the face image registration processing of registering the photographed image in which a face of a certain person is photographed as the registration target image will be described below with reference to Fig. 3. Fig. 3 is a flowchart illustrating the flow of the face image registration processing in the face authentication apparatus 1.

As illustrated in Fig. 3, in the face image registration processing, the image acquisition unit 31 of the face authentication apparatus 1 acquires the registration target image A2 from the image input apparatus 5 (S10). In the face authentication apparatus 1, the registration target image A2 acquired by the image acquisition unit 31 is registered as the registered image R of the registered-people information P in the registered image database 21. By way of example, the image acquisition unit 31 acquires the name (ID) of the registered-people information P from the input of the operation unit 11. The image acquisition unit 31 automatically generates the identification information on the registered image.

Then the face feature data extraction unit 32 analyzes the registration target image A2 to extract feature data relating to the face of the person included in the registration target image A2, and registers the feature data in the registered image database 21. That is, the face feature data extraction unit 32 stores the extracted feature data in the registered image R (S11).

The face-information data estimation unit 33 stores the face-information data generated from the analysis result of the registration target image A2 in the registered image R (S12). Therefore, the face image registration processing is ended.

### (Flow of face image authentication processing)

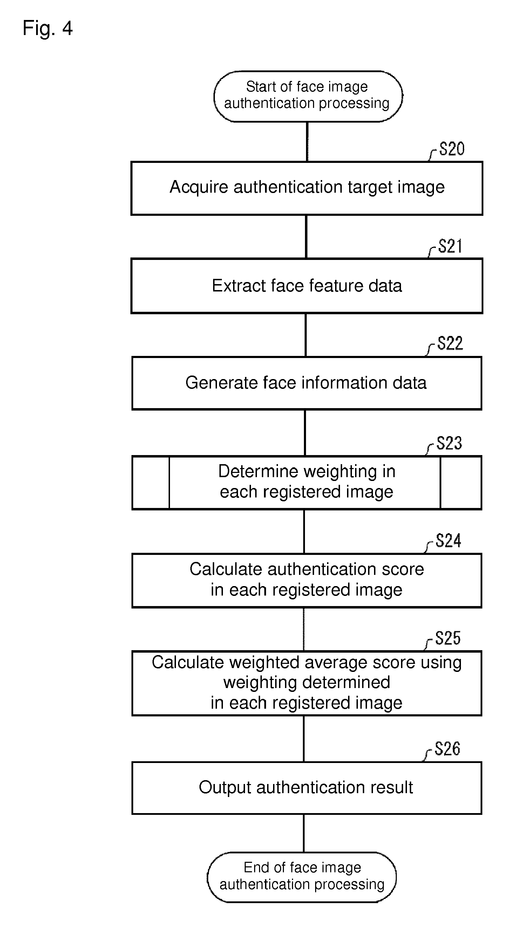

A flow of the face image authentication processing of authenticating the photographed image in which a face of a certain person is photographed as the inputted image will be described below with reference to Fig. 4. Fig. 4 is a flowchart illustrating the flow of the face image authentication processing in the face authentication apparatus 1.

As illustrated in Fig. 4, in the face image authentication processing, when the image acquisition unit 31 acquires the inputted image A1 input from the image input apparatus 5 (S20), the inputted image A1 is transferred to the face feature data extraction unit 32.

The face feature data extraction unit 32 analyzes the inputted image A1 to extract the face feature data from the inputted image A1 (S21).
The face-information data estimation unit 33 analyzes the inputted image A1, and generates the face-information data from an analysis result (S22).

The weighting determination unit 34 determines the weight in each registered image based on the face-information data generated from the analysis result of the inputted image A1 and the face-information data of the registered image (S23). The "weight determination processing in each registered image" in Step S23 is described in detail later.

The authentication score calculation unit 35 calculates the authentication score in each registered image by comparing the face feature data of the inputted image and the face feature data of the registered image (S24).

The weighted authentication score calculation unit 36 calculates the weighted authentication score in which the weight determined in each registered image is applied to the authentication score calculated in each registered image (S25).

The authentication result output unit 37 authenticates the inputted image A1 using the weighted authentication score, and outputs the authentication result to the display unit 12 (S26). Therefore, the face image authentication processing is ended.

### (Working example)

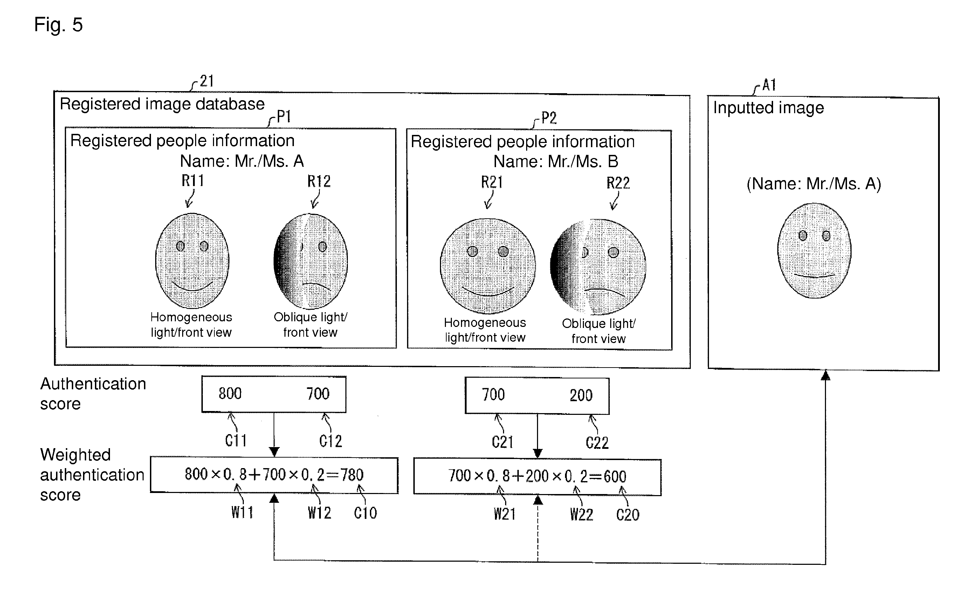

A working example of the authentication in which the weighted authentication score is used will be described below with reference to Fig. 5. In the working example, how the face image authentication processing is performed under the following precondition will be described along the flowchart in Fig. 4.

A registered-people information P1 and a registered-people information P2 are registered in the registered image database 21. The face-information data of the registered image, which is registered with respect to the registered-people information P1 and the registered-people information P2, includes items of a "lighting condition" and a "facial orientation". The classification is used in the setting value of the item.

The registered-people information P1 is the registration about "Mr./Ms. A", and "Mr./Ms. A" has a slightly long face. A registered image R11 and a registered image R12 are registered with respect to the registered-people information P1. "Homogeneous light" and the "front view" are set to the "lighting condition" and the "facial orientation" of the registered image R11, respectively. The "oblique light" and the "front view" are set to the "lighting condition" and the "facial orientation" of the registered image R12, respectively.

The registered-people information P2 is the registration about "Mr./Ms. B", and "Mr./Ms. B" has a round face compared with "Mr./Ms. A". A registered image R21 and a registered image R22 are registered with respect to the registered-people information P2. The "homogeneous light" and the "front view" are set to the "lighting condition" and the "facial orientation" of the registered image R21, respectively. The "oblique light" and the "front view" are set to the "lighting condition" and the "facial orientation" of the registered image R22, respectively.

The inputted image A1 that becomes the authentication target is the image in which "Mr./Ms. A" is photographed from the front side under the homogeneous light.

Under the precondition, the face authentication apparatus 1 performs the following face image authentication processing.

When the inputted image A1 is input (S20), the face feature data extraction unit 32 extracts the face feature data of the inputted image A1 (S21). The face-information data estimation unit 33 generates the face-information data of the inputted image A1 (S22). The face-information data estimation unit 33 obtains the "homogeneous light" as the "lighting condition" from the inputted image A1, and also obtains the front view" as the "facial orientation" from the inputted image A1.

Then the weighting determination unit 34 determines the weight in each registered image by comparing the face-information data of the inputted image A and the face-information data of the registered image (S23). At this point, the registered images of the pieces of registered-people information P1 and P2 are sequentially read from the registered image database 21 and compared.

For example, in the registered-people information P1, the face-information data of the registered image R11 agrees with the face-information data of the inputted image. The face-information data of the registered image R12 agrees with the face-information data of the inputted image A1 with respect to the "facial orientation" because of the front view", while the face-information data of the registered image R12 does not agree with the face-information data of the inputted image A1 with respect to the "lighting condition" because of the "oblique light".

Therefore, the weighting determination unit 34 allocates the larger weight to the registered image R11 compared with the registered image R12. For example, as illustrated in Fig. 5, the weighting determination unit 34 allocates "0.8" to a weight W11 of the registered image R11, and allocates "0.2" to a weight W12 of the registered image R12. Because the weights W11 and W12 are used in the weighted mean, a sum of the weights W11 and W12 is calculated so as to become "1.0".

Similarly, in the registered-people information P2, the face-information data of the registered image R21 agrees with the face-information data of the inputted image, while the face-information data of the registered image R22 differs partially from the face-information data of the inputted image.

Therefore, the weighting determination unit 34 allocates the larger weight to the registered image R21 compared with the registered image R22. For example, as illustrated in Fig. 5, the weighting determination unit 34 allocates "0.8" to a weight W21 of the registered image R21, and allocates "0.2" to a weight W22 of the registered image R22. The sum of the weights W21 and W22 becomes "1.0" like the weight W11.

Then the authentication score calculation unit 35 calculates the authentication score by sequentially comparing the inputted image A1 to the registered images R11 and R12 of the registered-people information P1 and the registered images R21 and R22 of the registered-people information P2 (S24).

In the registered image R11, the face-information data agrees with the inputted image A1, and the face extraction data extracted from "Mr./Ms. A" identical to the inputted image A1 is stored. Therefore, the authentication score calculation unit 35 calculates the high authentication score with respect to the registered image R11. In the registered image R11, although the face extraction data extracted from "Mr./Ms. A" identical to the inputted image A1 is stored, the face-information data of the registered image differs partially from the face-information data of the inputted image, and the partial difference has an influence on the exterior. Therefore, the authentication score calculation unit 35 calculates the authentication score lower than that of the registered image R11 with respect to the registered image R12.

Therefore, for example, as illustrated in Fig. 5, the authentication score calculation unit 35 calculates that an authentication score C11 of the registered image R11 is "800", and calculates that an authentication score C12 of the registered image R12 is "700".

On the other hand, in the registered image R21, although the face-information data agrees with the inputted image A1, the face feature data extracted from "Mr./Ms. B" different from the inputted image A1 is stored. Therefore, the authentication score calculation unit 35 calculates the authentication score lower than that of the registered image R11 with respect to the registered image R21. In the registered image R22, both the face-information data and the photographed person differ from the inputted image A1. Therefore, the authentication score calculation unit 35 calculates the authentication score lower than that of the registered image R12 with respect to the registered image R22.

Therefore, for example, as illustrated in Fig. 5, the authentication score calculation unit 35 calculates that an authentication score C21 of the registered image R21 is "700", and calculates that an authentication score C22 of the registered image R22 is "200".

Then the weighted authentication score calculation unit 36 applies the weight determined in Step S23 to the authentication score calculated in Step S24, and calculates the authentication score to which the weighted mean is performed (S25).

That is, a weighted authentication score C10 for the registered-people information P1 is calculated from "authentication score C11 × weight W11 + authentication score C12 × weight W12". Therefore, weighted authentication score C10 = 800 × 0.8 + 700 × 0.2 = 780 is obtained.

On the other hand, similarly weighted authentication score C20 = 700 × 0.8 + 200 × 0.2 = 600 is obtained with respect to a weighted authentication score C20 for the registered-people information P2.

Then the authentication result output unit 37 returns the name "Mr./Ms. A" of the registered-people information P1 as the authentication result of the inputted image A1, because the weighted authentication score C10 for the registered-people information P1 is larger than the weighted authentication score C20 for the registered-people information P2 (S26).

In the working example, the sum of the weights is configured so as to become "1.0". However, the sum of the weights is not limited to "1.0". For example, in the case that only one registered image exists with respect to the registered people information, the sum of the weights is not limited to "1.0", but the weight may be determined according to the number of approximate items within a range of at least 0.

### (Working effect)

As described above, in the image authentication apparatus 1 of the present invention that authenticates the person included in the inputted image A1, the inputted image A1 in which the object is photographed is checked against the registered image database 21. In the image authentication apparatus 1, the registered image R obtained by photographing the person and the photographing condition relating to the face of the person of the registered image R are registered in the registered image database 21 while correlated with each other. The image authentication apparatus 1 includes the face-information data estimation unit 33 that estimates the face-information data of the inputted image A1, the weighting determination unit 34 that determines the weighting according to the closeness between the face-information data of the registered image R and the face-information data of the inputted image A1, the authentication score calculation unit 35 that calculates the authentication score between the inputted image A1 and the registered image R, the weighted authentication score calculation unit 36 that applies the weighting determined with respect to the corresponding registered image R to the authentication score, and the authentication result output unit 37 that checks the inputted image A1 based on the weighted authentication score.

According to the configuration, the false recognition of the identical person as the different person or the false recognition of the different person as the identical person due to the difference between the face-information data of the inputted image A1 and the face-information data of the registered image R can be prevented.

In the above description, the term of "authentication" means the processing of specifying the person by checking the face of the person photographed in the inputted image against the face of the person photographed in one of registered images. However, the "authentication" is not limited to the processing.

For example, the face authentication apparatus 1 may be configured such that, in the authentication processing, the person is not specified, but a list of authentication scores obtained as a result of the checking is output. In other words, the face authentication apparatus 1 may output the result in which a candidate is selected in order to specify the person as the authentication result.

The subject that becomes the target can be arbitrarily selected. Specifically, a vehicle and a number plate of the vehicle may be used as the subject. That is, the object that is distinguished by pattern recognition can be used as the subject.

### (Weighting determination unit)

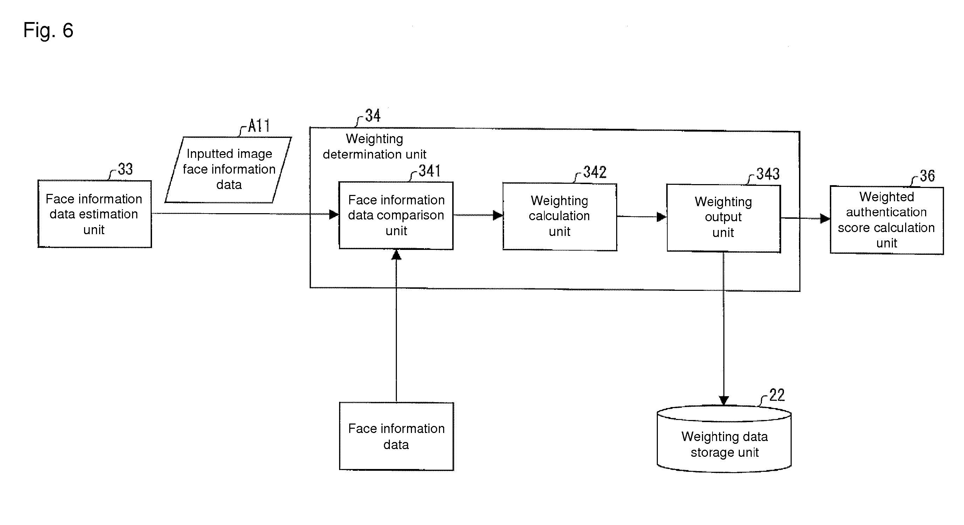

The detailed weighting determination made by the weighting determination unit 34 will be described below with reference to Figs. 6 to 8.

A detailed configuration of the weighting determination unit 34 will be described below with reference to Fig. 6. Fig. 6 is a functional block diagram illustrating each functional unit included in the weighting determination unit 34.

As illustrated in Fig. 6, the weighting determination unit 34 includes a face-information data comparison unit (the input condition determination means, the input condition ranking means, and the closeness calculation means) 341, a weighting calculation unit (the weighting determination means) 342, and a weighting output unit 343.

The face-information data comparison unit 341 determines the closeness of the face-information data by comparing the face-information data of the inputted image and the face-information data of the registered image, and the face-information data comparison unit 341 counts the number of approximate items indicating how many close items exist.

For example, the face-information data comparison unit 341 determines the closeness of the face-information data to count the number of approximate items in the following way.

The face-information data comparison unit 341 compares the item included in the face-information data of the inputted image and the item included in the face-information data of the registered image to determine the closeness between the items.

In the determination of the closeness between the items, the face-information data comparison unit 341 determines whether the items agree with each other or whether the closeness between the items falls within a predetermined range although the items do not agree with each other.

When the item included in the face-information data of the inputted image agrees with the item included in the face-information data of the registered image, the face-information data comparison unit 341 increases the number of approximate items.

In the case that the setting of the item is the continuous value, the face-information data comparison unit 341 determines whether the closeness between the item included in the face-information data of the inputted image and the item included in the face-information data of the registered image falls within the predetermined range. When determining that the closeness between the items falls within the predetermined range, the face-information data comparison unit 341 increases the number of approximate items. Using a threshold, the face-information data comparison unit 341 determines whether the closeness between the items falls within the predetermined range.

The case that the item is the "facial orientation" will be exemplified below. In the case that the "facial orientation" is the continuous value, for example, the face-information data comparison unit 341 can determine the closeness based on the threshold of "±15 degrees".

At this point, specifically, in the face-information data comparison unit 341, when the "facial orientation" included in the face-information data of the inputted image is "right 10 degrees", and when the "facial orientation" included in the face-information data of the registered image is the "front 0 degree", a difference between the "facial orientations" becomes "10 degrees". Therefore, the face-information data comparison unit 341 determines that the closeness between the items falls within the range of the threshold, and determines that the closeness between the items falls within the predetermined range.

In the case that the "facial orientation" is the classification, the face-information data comparison unit 341 increases the number of approximate items when the items agree with each other.

The face-information data comparison unit 341 transmits the counted number of approximate items to the weighting calculation unit 342.

The weighting calculation unit 342 calculates the weighting with respect to the authentication score, which is calculated in each registered image, according to the number of approximate items counted in each registered image by the face-information data comparison unit 341. A specific working example of the weighting is described later.

For example, because the weighting calculated in each registered image by the weighting calculation unit 342 is used in the averaging, the sum of the weights is adjusted so as to become "1.0". The weighting calculated in each registered image by the weighting calculation unit 342 may include "0". The registered people information may vary in the weighting calculated in each registered image by the weighting calculation unit 342.

In the case that there is no difference of the number of approximate items determined in each registered image, the weighting calculation unit 342 may perform the weighting such that all the weights become identical. For example, the case that all the numbers of approximate items are "0" can be cited as the case that all the weights become identical. For example, when each item is the classification, and when the items differ completely from one another in the comparison result of the face-information data comparison unit 341, all the numbers of approximate items become "0".

In such cases, the weight for each registered image becomes a value in which "1.0" is divided by the number of registered images, and therefore the weighted authentication score becomes the arithmetic average of the authentication scores.

The weighting calculation unit 342 may set the weight of the registered image, in which the number of approximate items becomes the largest in a certain piece of registered people information and the number of approximate items becomes the smallest between a certain piece of registered people information and another piece of registered people information, to a higher value.

The weighting output unit 343 stores the weighting calculated in each registered image in the weighting data storage unit 22 while correlating the weighting with the identification information on the registered image, and the weighting output unit 343 transfers the control to the weighted authentication score calculation unit 36.

### (Weighting determination processing of each registered image)

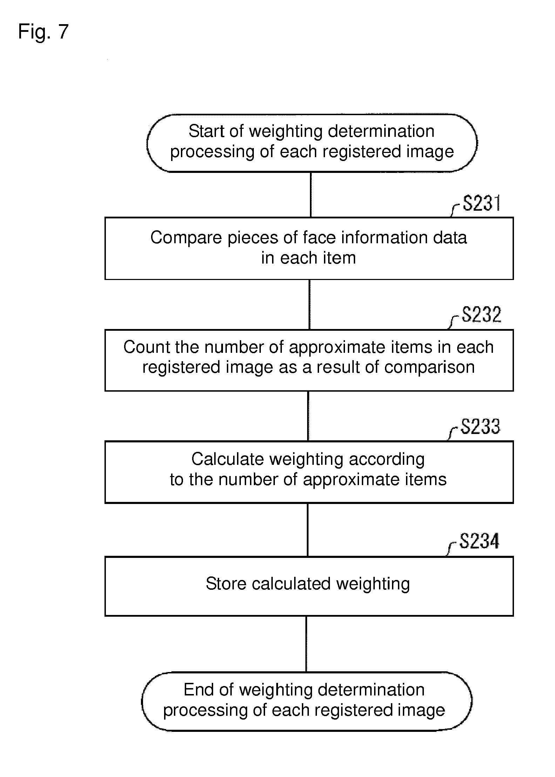

A flow of "weighting determination processing of each registered image" will be described below with reference to Fig. 7. Fig. 7 is a flowchart illustrating the flow of the "weighting determination processing of each registered image" in the face authentication apparatus 1.

As illustrated in Fig. 7, in the "weighting determination processing of each registered image", the face-information data comparison unit 341 compares the face-information data of the inputted image to the face-information data of each registered image with respect to each item (S231).

As a result of comparison, the face-information data comparison unit 341 counts how many approximate items in each registered image (S232). That is, the face-information data comparison unit 341 increases the number of approximate items in each registered image according to the comparison result.

Then the weighting calculation unit 342 calculates the weighting in each registered image according to the number of approximate items counted in each registered image (S233).

The weighting output unit 343 stores the weighting calculated by the weighting calculation unit 342 in the weighting data storage unit 22 (S234). Therefore, the weighting determination processing of each registered image is ended.

### (Working example)

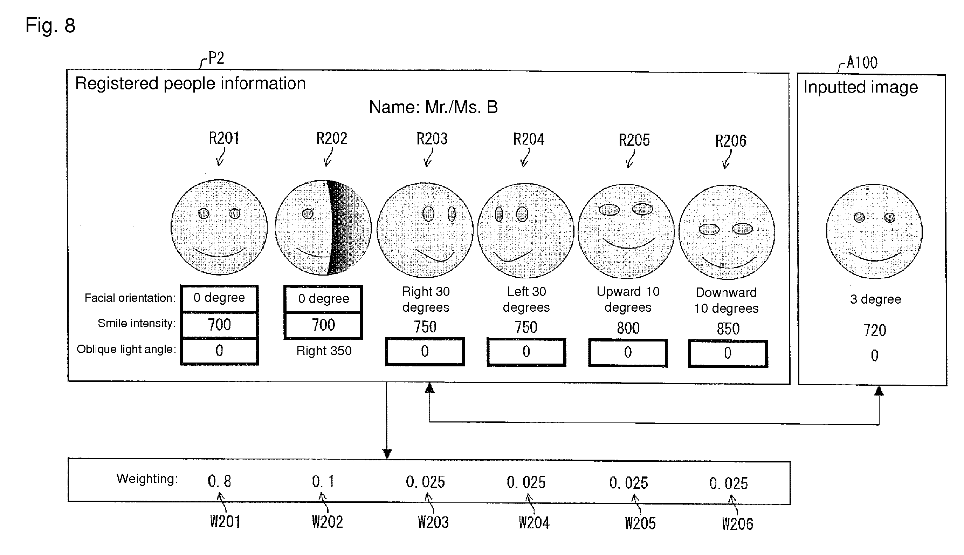

A working example of the weighting determination processing of each registered image will be described below with reference to Fig. 8. In the working example, how to perform the weighting determination processing of each registered image under the following precondition will be described along the flowchart in Fig. 7.

As illustrated in Fig. 8, registered images R201 to R206 are registered with respect to the registered-people information P2 (Mr./Ms. B) in the registered image database 21

The items of the "facial orientation", the "smile intensity", and the "oblique light angle" are included in the face-information data of the registered image. The continuous value is used in the setting value of the item.

Fig. 8 illustrates the specific setting values for the pieces of face-information data of the registered images R201 to R206. For example, in the face-information data of the registered image R201, "0 degree", "700", and "0" are set to the items of the "facial orientation", the "smile intensity", and the "oblique light angle", respectively.

"Mr./Ms. B" is photographed in an inputted image A100 in Fig. 8. In the face-information data of the inputted image A100, "3 degrees", "720", and "0" are set to the items of the "facial orientation", the "smile intensity", and the "oblique light angle", respectively.

At this point, it is assumed that "5 degrees", "30", and "100" are set to the items of the "facial orientation", the "smile intensity", and the "oblique light angle" as the thresholds used by the face-information data comparison unit 341.

Under the precondition, the weighting determination unit 34 performs the weighting determination processing in each registered image in the following way.

The item included in the face image data of the inputted image is compared to each item included in the pieces of face-information data of the registered images R201 to R206 (S231).

Specifically, whether the difference between the value of the item included in the face image data of the inputted image and the value of each item included in the pieces of face-information data of the registered images R201 to R206 is less than or equal to the threshold is determined.

For example, the registered image R201 will be described below. The "facial orientation" of the face-information data of the registered image R201 is "0 degree", while the "facial orientation" included in the face-information data of the inputted image A100 is "3 degrees".

Therefore, the face-information data comparison unit 341 calculates that the difference between the pieces of face-information data is "3 degrees" with respect to the "facial orientation". At this point, it is assumed that a positive and negative signs are not considered while attention is paid to an absolute value of the difference. Hereinafter, it is assumed that the face-information data comparison unit 341 calculates that the differences are "20" and "0" with respect to the "smile intensity" and the "oblique light angle".

Then, as a result of comparison, the face-information data comparison unit 341 counts the number of approximate items in each registered image (S232). The number of approximate items indicates how many approximate items existing within the range of the threshold.

Specifically, the face-information data comparison unit 341 counts the number of items in each of which the difference is less than or equal to the threshold with respect to the registered images R201 to R206.

For example, the registered image R201 will be described below. The difference of the "facial orientation" is "3 degrees" while the threshold of the "facial orientation" is "5 degrees". Therefore, because the difference is less than or equal to the threshold with respect to the item of the "facial orientation", the face-information data comparison unit 341 increases the number of approximate items.

Similarly, because the difference is less than or equal to the threshold with respect to the items of the "smile intensity" and the "oblique light angle", the face-information data comparison unit 341 increases the number of approximate items with respect to the items of the "smile intensity" and the "oblique light angle".

Thus, for the registered image R201, the number of approximate items is "3" because all the items are close to the items of the inputted image.

Similarly, for the registered image R202, the number of approximate items is "2" because the items of the "facial orientation" and the "smile intensity" are close to the items of the inputted image. For the registered images R203 to R206, the number of approximate items is "1" because only the item of the "oblique light angle" agrees with the item of the inputted image.

Then the weighting calculation unit 342 calculates the weighting of each of the registered images R201 to R206 according to the number of approximate items.

A weighting W201 of "0.8" that is the highest among the registered images R201 to R206 is allocated to the registered image R201 having the largest number of approximate items of "3".

A weighting W202 of "0.1" that is the second highest next to the weighting W201 is allocated to the registered image R202 having the second largest number of approximate items next to the registered image R201.

The remaining weighting of "0.1" to be allocated is equally allocated to the registered images R203 to R206. That is, each of weightings W203 to W206 of the registered images R203 to R206 is "0.025" into which "0.1" is equally divided.

Then the weighting output unit 343 stores the weightings W201 to W206 calculated by the weighting calculation unit 342 in the weighting data storage unit 22 (S234).

### (Modification of weighting determination unit)

A modification of the weighting determination unit 34 will be described below. In the modification, the registered image is ranked using the closeness of the face-information data, and the weighting is determined based on the rank. In the modification, the face-information data comparison unit 341 and the weighting calculation unit 342 are changed as follows.

The change of the face-information data comparison unit 341 will be described. The face-information data comparison unit 341 calculates the closeness between each item of the face-information data of the registered image and the item of the face-information data of the inputted image. The face-information data comparison unit 341 determines the closeness between the face-information data of the inputted image and the face-information data of the registered image based on the closeness calculated in each item. The face-information data comparison unit 341 performs the ranking based on the determination result of the closeness of the face-information data.

In the case that the setting of the item is the continuous value, the face-information data comparison unit 341 calculates the closeness from the difference between the item included in the face-information data of the inputted image and the item included in the face-information data of the registered image. In this case, the face-information data comparison unit 341 determines the closeness of the face-information data based on the calculated closeness. For example, in the case that one item is included in the face-information data, the face-information data comparison unit 341 determines that the pieces of face-information data are closer to each other with decreasing difference between the items.

For example, in the case that the plurality of items are included in the face-information data, the face-information data comparison unit 341 outputs the ranking of the closeness in each item.

The face-information data comparison unit 341 may determine the closeness using the threshold. The face-information data comparison unit 341 can determine that the pieces of face-information data are closer to each other when the difference is less than or equal to the threshold. At this point, the threshold may be provided in a stepwise manner. The face-information data comparison unit 341 may determine the closeness in the stepwise manner according to the step to which the threshold belongs.

In the case that the setting of the item is the classification, the face-information data comparison unit 341 determines the closeness of the classification according to a rule of the closeness of the classification. The rule of the closeness of the classification means the closeness that is defined between the different classifications.

A definition such that a relationship between the "front view" and the "view facing the right" is close can be cited as an example of the rule of the closeness of the classification. Alternatively, the rule of the closeness of the classification may be a relative rule that the relationship between the "front view" and the "view facing the right" is closer than the relationship between the "view facing the left" and the "view facing the right". For example, the rule of the closeness of the classification may previously be defined in the storage unit 20 of the face authentication apparatus 1.

The change of the weighting calculation unit 342 will be described below. The weighting calculation unit 342 calculates the weighting according to the ranking that is calculated in each item by the face-information data comparison unit 341.

In this case, for example, the weighting calculation unit 342 equally allocates the weight to each item, and allocates the higher weighting to the registered image having the higher rank in each item within the range of the weight allocated to each item. The weighting calculation unit 342 calculates the weighting in each registered image by adding the weights allocated to the items.

That is, for the four items, the weighting of "0.25" is allocated to each item. For example, the weighting calculation unit 342 allocates the weighting of "0.25" to the registered image having the highest rank in each item. When the registered image has the two items, the weighting of the registered image becomes "0.5".

The weighting calculation unit 342 may allocate the weighting to the registered image having the item to which the predetermined ranking is performed.

### [Flow of processing of modification]

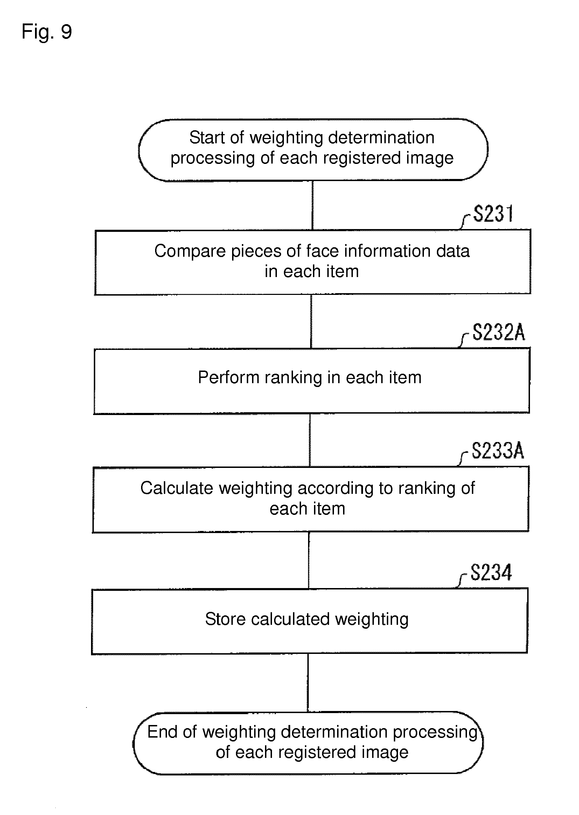

The flow of the "weighting determination processing of each registered image" in the modification will be described below with reference to Fig. 9. Fig. 9 is a flowchart illustrating another example of the flow of the weighting determination processing of each registered image in the weighting determination unit 34.

As illustrated in Fig. 9, in the modification of the weighting determination processing of each registered image, the face-information data comparison unit 341 compares the face-information data of the inputted image to the face-information data of each registered image with respect to each item (S231).

Then the face-information data comparison unit 341 ranks the closeness between the face-information data of the inputted image and the face-information data of the registered image with respect to each item according to the comparison result (S232A).

Then the weighting calculation unit 342 calculates the weighting in each registered image according to the ranking (S233A).

The weighting output unit 343 stores the weighting calculated by the weighting calculation unit 342 in the weighting data storage unit 22 (S234). Therefore, the weighting determination processing of each registered image is ended.

### (Another modification of weighting determination unit)

Another modification of the weighting determination unit 34 will be described below. In the modification, the weighting determination unit 34 calculates the difference between the value of the item included in the face-information data of the inputted image and the value of the item included in the face-information data of the registered image, and determines the weighting based on the calculated difference.

Specifically, the weighting determination unit 34 calculates an inverse number of the difference in each registered image, and determines the final weighting by normalizing the sum of the calculated inverse numbers.

The case that the item is the "facial orientation" will be exemplified below.

In the case that the difference between the value of the "facial orientation" included in the face-information data of the inputted image and the value of the "facial orientation" included in the face-information data of a first registered image are 50 degrees, the weighting determination unit 34 calculates 1/50 = 0.02 as the inverse number of the difference.

In the case that the difference between the value of the "facial orientation" included in the face-information data of the inputted image and the value of the "facial orientation" included in the face-information data of a second registered image are 2 degrees, the weighting determination unit 34 calculates 1/2 = 0.5 as the inverse number of the difference.

Because the sum of the calculated inverse numbers is 0.52, the weightings of the first and second registered images become 0.02/0.52 and 0.5/0.52, respectively. The sum of the calculated weightings is 0.02/0.52 + 0.5/0.52 = 1.0.

### [Second embodiment]

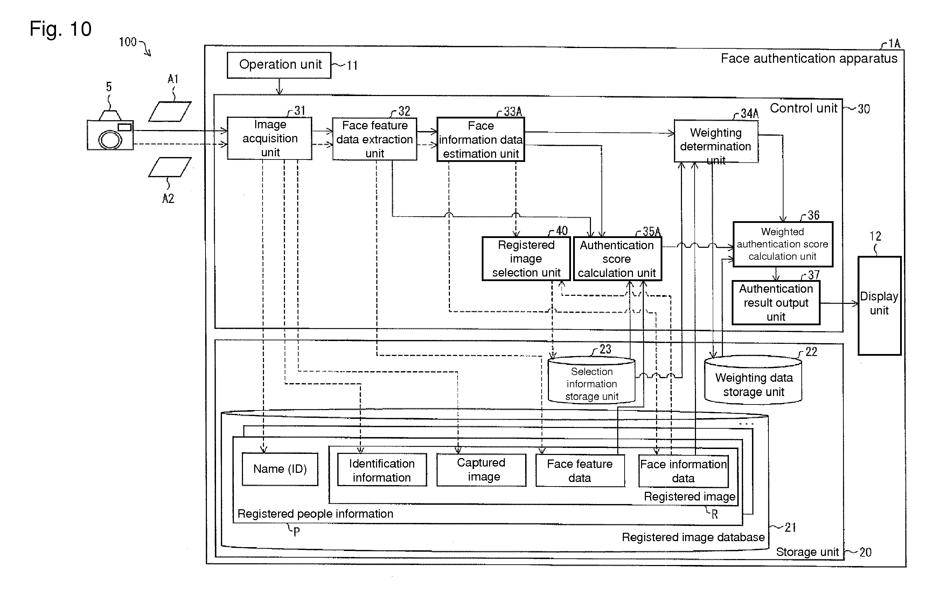

Another embodiment of the present invention will be described below with reference to Figs. 10 to 17. For the sake of convenience, a component having the same function as the above embodiment is designated by the same numeral, and the description is omitted.

In the following embodiment, the registered image used to calculate the authentication score is previously selected under a predetermined condition, and the authentication is performed using the selected registered image.

A face authentication apparatus (the image authentication apparatus) 1 A in Fig. 10 differs from the face authentication apparatus 1 in the following points.

In the face authentication apparatus 1A, the face-information data estimation unit 33, the weighting determination unit 34, and the authentication score calculation unit 35 in the control unit 30 of the face authentication apparatus 1 are changed to a face-information data estimation unit 33A, a weighting determination unit 34A, and an authentication score calculation unit (the similarity calculation means) 35A, respectively, and a registered image selection unit (the selection means) 40 is also included.

The face authentication apparatus 1 A further includes a selection information storage unit 23 in the storage unit 20 of the face authentication apparatus 1. The registered image selection unit 40 performs processing in the "face image registration processing". These different points will be described below.

The face-information data estimation unit 33A registers the face-information data in the "face image registration processing", and then notifies the registered image selection unit 40 that the registration of the face-information data is ended.

Selection information including the identification information on the registered image that should be a processing target in the "face image authentication processing" is stored in the selection information storage unit 23. That is, the identification information on the registered image, which is used to calculate the authentication score in the authentication score calculation unit 35A and to perform the weighting determination in the weighting determination unit 34A, is stored in the selection information storage unit 23.

In the "face image authentication processing", when receiving the notification that the registration of the face-information data is ended from the face-information data estimation unit 33A, the registered image selection unit 40 selects the registered image that should be the processing target. Specifically, the registered image selection unit 40 compares the pieces of registered-people information P with respect to the item included in the face-information data of the registered image, and selects the registered image including the close item as the registered image that should be the processing target. The registered image selection unit 40 stores the selection information including the identification information on the selected registered image in the selection information storage unit 23.

For example, the registered image selection unit 40 selects the registered image. From the other viewpoint, the face feature data and face-information data that are used in the authentication processing are selected.

The weighting determination unit 34A determines the weighting with respect to the selected registered image. That is, the weighting determination unit 34A determines the weighting with respect to the registered image in which the identification information is included in the selection information stored in the selection information storage unit 23. In other words, the weighting determination unit 34A determines the weighting for the authentication score that should be calculated with respect to the selected registered image by the authentication score calculation unit 35.

The already-described technique can be adopted as the weighting determination technique in the weighting determination unit 34A.

The authentication score calculation unit 35A performs the matching between the inputted image and the selected registered image to calculate the authentication score indicating the degree of approximation between the inputted image and the registered image. That is, the authentication score calculation unit 35A calculates the authentication score with respect to the registered image in which the identification information is included in the selection information stored in the selection information storage unit 23. The already-described technique can be adopted as the authentication score calculating technique in the authentication score calculation unit 35A.

### (Flow of face image registration processing)

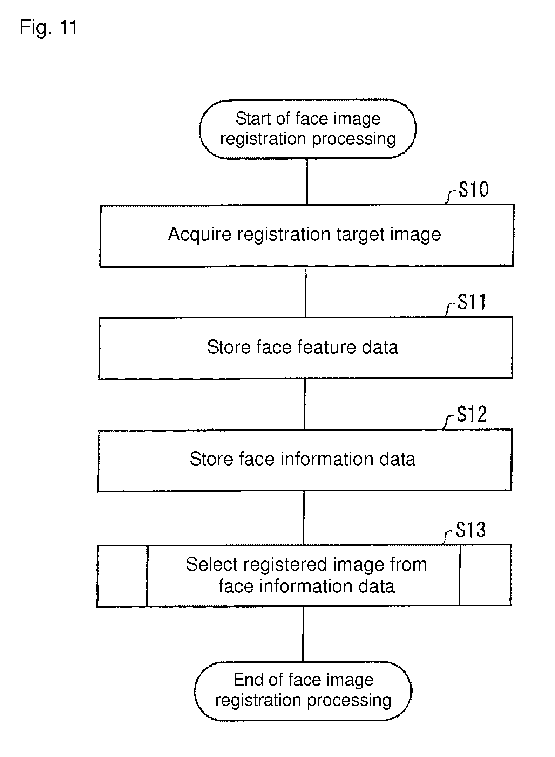

A flow of the face image registration processing of registering the photographed image in which a face of a certain person is photographed as the registration target image will be described below with reference to Fig. 11. Fig. 11 is a flowchart illustrating the flow of the face image registration processing in the face authentication apparatus 1 A.

Because Steps S10 to S12 are already described in Fig. 3, the description is omitted. In Step S13 subsequent to Step S12, the registered image selection unit 40 selects the registered image from the face-information data. The detail of the "processing of selecting the registered image using the face-information data" is described later. Therefore, the face image registration processing is ended.

### (Flow of face image authentication processing)

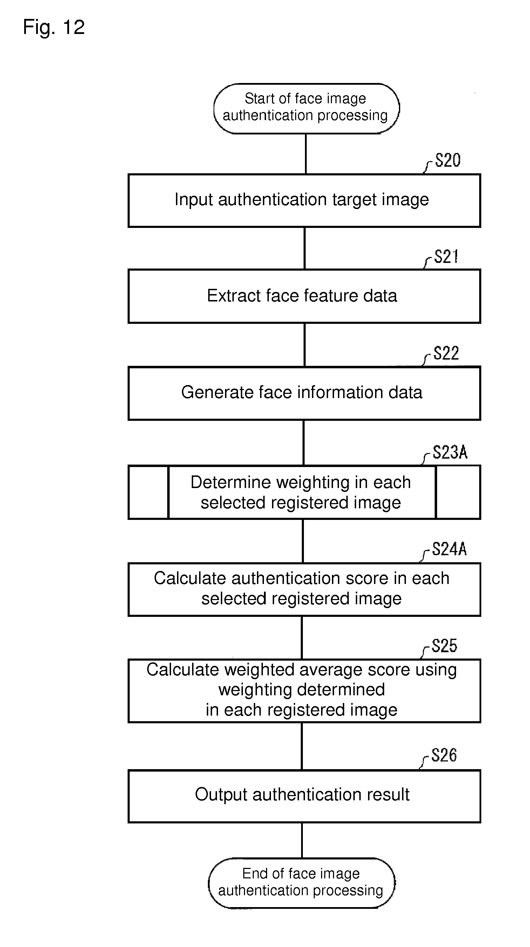

A flow of the face image authentication processing of authenticating the photographed image in which a face of a certain person is photographed as the inputted image will be described below with reference to Fig. 12. Fig. 12 is a flowchart illustrating the flow of the face image authentication processing in the face authentication apparatus 1 A.

Because Steps S20 to S22 are already described in Fig. 4, the description is omitted. Subsequent to Step S22, the weighting determination unit 34A determines the weighting with respect to the selected registered image (S23A).

The authentication score calculation unit 35A performs the matching between the inputted image and the selected registered image to calculate the authentication score indicating the degree of approximation between the inputted image and the registered image (S24A).

The weighted authentication score calculation unit 36 calculates the weighted authentication score in which the weighting determined by the weighting determination unit 34A is applied to the authentication score calculated by the authentication score calculation unit 35A (S25). The authentication result output unit 37 authenticates the inputted image A1 using the weighted authentication score, and outputs the authentication result to the display unit 12 (S26). Therefore, the face image authentication processing is ended.

### (Working example)

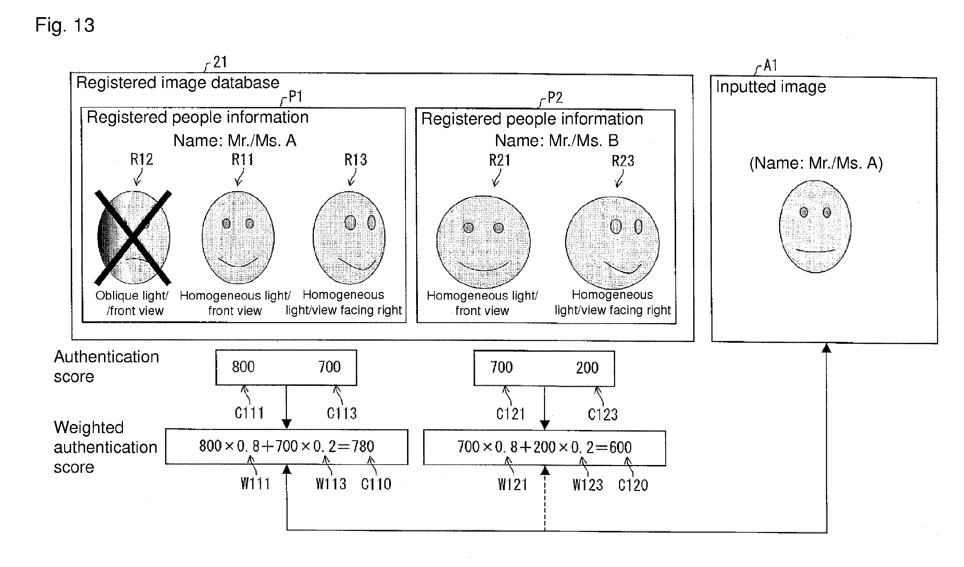

A working example of the face image registration processing and face image authentication processing in the face authentication apparatus 1A will be described below with reference to Fig. 13. In the working example, how the face image registration processing and face image authentication processing in the face authentication apparatus 1 A are performed under the following precondition will be described along the flowcharts in Figs. 11 and 12.

As illustrated in Fig. 13, the registered-people information P1 (Mr./Ms. A) and the registered-people information P2 (Mr./Ms. B) are registered as the precondition in the registered image database 21 through Steps S10 to S12 in the face image registration processing in Fig. 11. The face-information data of the registered image, which is registered with respect to the registered-people information P1 and the registered-people information P2, includes items of the "lighting condition" and the "facial orientation". The classification is used in the setting value of the item.

The registered images R11 to R13 are registered with respect to the registered-people information P1. The "homogeneous light" and the "front view" are set to the "lighting condition" and the "facial orientation" of the registered image R11, respectively. The "oblique light" and the "front view" are set to the "lighting condition" and the "facial orientation" of the registered image R12, respectively. The "homogeneous light" and the "view facing the right" are set to the "lighting condition" and the "facial orientation" of the registered image R13, respectively.

The registered images R21 and R22 are registered with respect to the registered-people information P2. The "homogeneous light" and the "front view" are set to the "lighting condition" and the "facial orientation" of the registered image R21, respectively. The "homogeneous light" and the "view facing the right" are set to the "lighting condition" and the "facial orientation" of the registered image R23, respectively.

The inputted image A1 that becomes the authentication target is the image in which "Mr./Ms. A" is photographed from the front side under the homogeneous light.

Under the precondition, the face authentication apparatus 1 A further performs the processing of selecting the registered image that should be the processing target (S13).

For example, the registered image selection unit 40 selects the registered images in which the pieces of face-information data agree with each other between the registered-people information P1 and the registered-people information P2. In the example in Fig. 13, the registered image R11 agrees with the registered image R21 in each item included in the face-information data. The registered image R13 agrees with the registered image R23 in each item included in the face-information data.

Therefore, with respect to the registered-people information P1, the registered image selection unit 40 stores the pieces of identification information on the registered images R11 and R13 in the selection information storage unit 23. With respect to the registered-people information P2, the registered image selection unit 40 stores the pieces of identification information on the registered images R21 and R23 in the selection information storage unit 23.

The face authentication apparatus 1 further performs the following face image authentication processing.

Because Steps S20 to S22 are already described, the description is omitted.

Subsequent to Step S22, the weighting determination unit 34A determines the weighting in each registered image by comparing the face-information data of the inputted image A and the face-information data of the selected registered image (S23A). Because Step 23A is similar to Step S23 in Fig. 5, the description is omitted.

As a result, in Step S23A, the weighting determination unit 34A allocates "0.8" to a weighting W111 of the registered image R11, and allocates "0.2" to a weighting W112 of the registered image R13. The weighting determination unit 34A allocates "0.8" to a weighting W121 of the registered image R21, and allocates "0.2" to a weighting W123 of the registered image R23.

Then the authentication score calculation unit 35A calculates the authentication score by sequentially comparing the inputted image A1 to the registered images R11 and R13 selected with respect to the registered-people information P1 and the registered images R21 and R23 selected with respect to the registered-people information P2 (S24A). Because Step 24A is similar to Step S24 in Fig. 5, the description is omitted.

As a result, in Step S24A, the authentication score calculation unit 35A calculates that an authentication score C111 of the registered image R11 is "800", and calculates that an authentication score C113 of the registered image R13 is "700". The authentication score calculation unit 35A calculates that an authentication score C121 of the registered image R21 is "700", and calculates that an authentication score C123 of the registered image R23 is "200".

The following pieces of processing in Steps S25 and S26 are performed as described in Fig. 5. In Step S25, from the results in Steps S23 and S24, the weighted authentication score calculation unit 36 calculates that a weighted authentication score C110 of the registered-people information P1 is "780", and calculates that a weighted authentication score C120 of the registered image P2 is "600".

In Step S26, the authentication result output unit 37 returns the name "Mr./Ms. A" of the registered-people information P1 from the result in Step S25.

### (Configuration example of registered image selection unit)

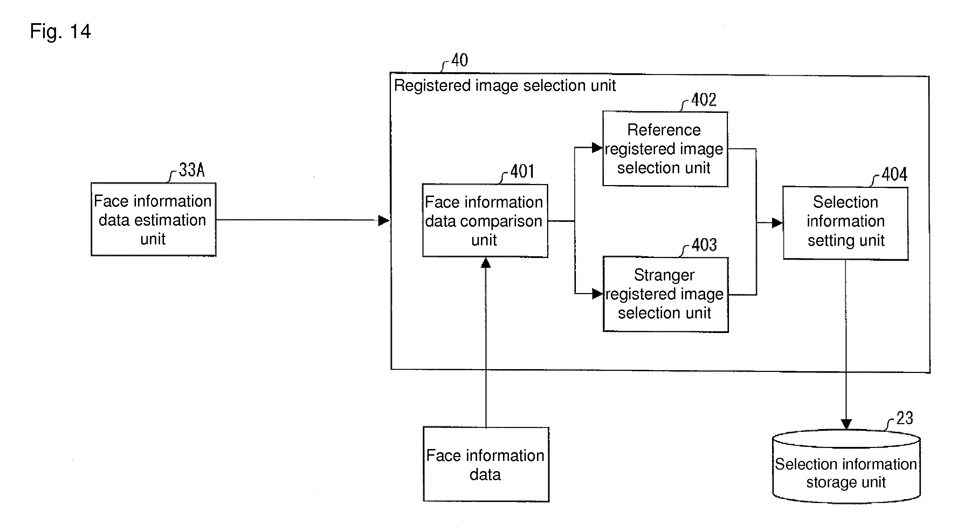

A configuration example of the registered image selection unit 40 will be described below with reference to Figs. 14 to 16.

In the configuration example, the registered image selection unit 40 is configured as follows. As illustrated in Fig. 14, the registered image selection unit 40 includes a face-information data mutual comparison unit (the photographing condition approximation determination means and the registration condition ranking means) 401, a reference registered image selection unit (the photographing condition closeness calculation means) 402, a stranger registered image selection unit (the photographing condition closeness calculation means) 403, and a selection information setting unit 404.

Based on the face-information data of the registered image of the assigned registered people information, the face-information data mutual comparison unit 401 compares the registered image of another piece of registered people information and the face-information data.

As used herein, another piece of registered people information means the registered people information except the assigned registered people information. The registered people information may be assigned by a user's instruction acquired through the operation unit 11, or the registered people information may randomly be assigned. Hereinafter, the assigned registered people information is referred to as reference registered people information.

For example, the face-information data mutual comparison unit 401 outputs the number of approximate items as the comparison result like the face-information data comparison unit 341.

That is, the face-information data mutual comparison unit 401 counts the number of approximate items by comparing the registered image of another piece of registered people information and the face-information data in each registered image of the reference registered people information. The face-information data mutual comparison unit 401 outputs the number of approximate items, which are counted in each registered image of another piece of registered people information, as the comparison result. Using the threshold, the face-information data mutual comparison unit 401 determines whether the items are approximate to each other.

The reference registered image selection unit 402 selects the registered image that becomes the processing target with respect to the reference registered people information based on the comparison result of the face-information data mutual comparison unit 401. For example, the reference registered image selection unit 402 may select the reference registered image, in which the number of approximate items of the comparison result agrees with or is similar to the number of approximate items of the registered image of another piece of registered people information, as the registered image that becomes the processing target.

The stranger registered image selection unit 403 selects the registered image that becomes the processing target with respect to the registered people information except the reference registered people information based on the comparison result of the face-information data mutual comparison unit 401. For example, the stranger registered image selection unit 403 may select the stranger registered image, in which the number of approximate items of the comparison result agrees with or is similar to the number of approximate items of the registered image of the registered people information that becomes the reference in all the items, as the registered image that becomes the processing target.

The selection information setting unit 404 stores the selection information including the pieces of identification information on the registered images, which are selected by the reference registered image selection unit 402 and stranger registered image selection unit 403, in the selection information storage unit 23.

### [Flow of processing in configuration example]

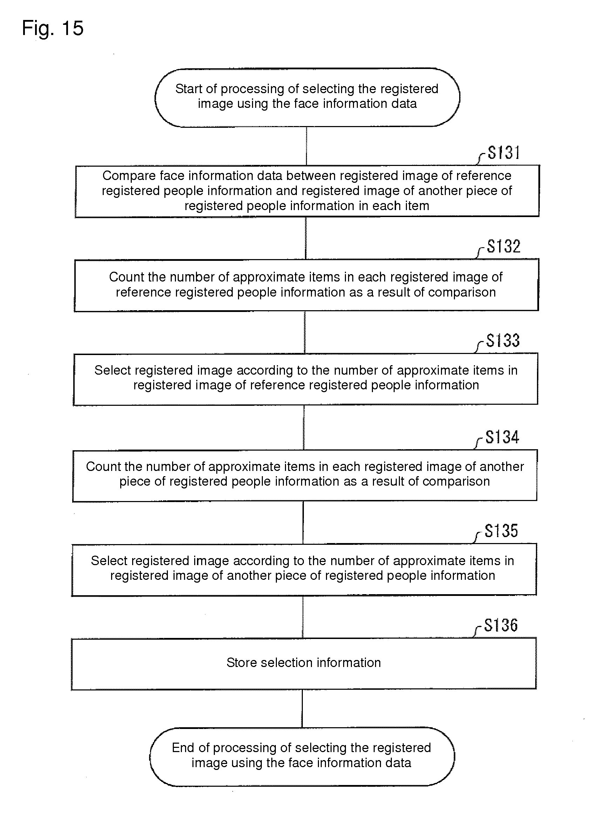

The detail of the "processing of selecting the registered image using the face-information data" performed by the registered image selection unit 40 of the configuration example will be described below with reference to Fig. 15. Fig. 15 is a flowchart illustrating the detail of the "processing of selecting the registered image using face-information data".

As illustrated in Fig. 15, in the "processing of selecting the registered image using face-information data", the face-information data mutual comparison unit 401 compares the face-information data between the registered image of the reference registered people information and the registered image of another piece of registered people information (S131).

The face-information data mutual comparison unit 401 counts the number of approximate items of the face-information data in each registered image of the reference registered people information (S132).

The reference registered image selection unit 402 selects the registered image with respect to the reference registered people information according to the comparison result of the face-information data mutual comparison unit 401, namely, the number of approximate items (S133).

The face-information data mutual comparison unit 401 counts the number of approximate items of the face-information data in each registered image of another piece of registered people information (S134).

The stranger registered image selection unit 403 selects the registered image with respect to the registered people information on the stranger according to the comparison result of the face-information data mutual comparison unit 401, namely, the number of approximate items (S135).

The selection information setting unit 404 registers the identification information on the registered image, which is selected with respect to the reference registered people information by the reference registered image selection unit 402, and the identification information on the registered image, which is selected with respect to the registered people information on the stranger by the stranger registered image selection unit 403, as the selection information in the selection information storage unit 23 (S136).

### [Working example of configuration example]

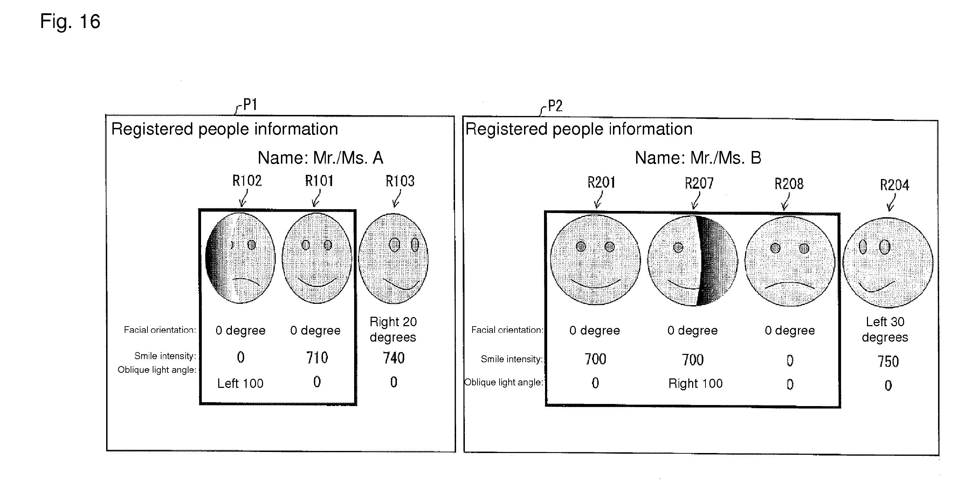

A working example of the "processing of selecting the registered image using the face-information data" according to the configuration example will be described below with reference to Fig. 16. In the working example, how to select the registered image under the following precondition will be described along the flowchart in Fig. 15.

As illustrated in Fig. 16, the registered-people information P1 and the registered-people information P2 are registered in the registered image database 21. Registered images R101 to R103 are registered with respect to the registered-people information P1. Registered images R201, R204, R207, and R208 are registered with respect to the registered-people information P2.

The items of the "facial orientation", the "smile intensity", and the "oblique light angle" are included in the face-information data of the registered image. The continuous value is used in the setting value of the item.

Fig. 16 illustrates the specific setting value of each registered image. For example, in the face-information data of the registered image R101, "0 degree", "710 degree", and "0" are set to the items of the "facial orientation", the "smile intensity", and the "oblique light angle", respectively.

Hereinafter, it is assumed that the registered-people information P1 is assigned. It is also assumed that "10 degrees", "15", and "110" are set to the items of the "facial orientation", the "smile intensity", and the "oblique light angle" as the thresholds used by the face-information data mutual comparison unit 401.

Under the precondition, the registered image selection unit 40 performs the "processing of selecting the registered image using the face-information data" in the following way.

The face-information data mutual comparison unit 401 compares the face-information data between each of the registered images R101 to R103 of the registered-people information P1 that becomes the reference and each of the registered images R201, R204, R207, and R208 of the registered-people information P2 (S131).

The face-information data mutual comparison unit 401 compares the face-information data of the registered image R101 to the face-information data of each of the registered images R201, R204, R207, and R208. The same holds true for the registered images R102 and R103.

The face-information data mutual comparison unit 401 counts the number of approximate items of the face-information data with respect to the registered images R101 to R103 (S132). For example, the face-information data mutual comparison unit 401 counts the number of approximate items between the registered image R101 and each of the registered images R201, R204, R207, and R208 in the following way.

The registered image R101 agrees with the registered image R201 in the "facial orientation" and the "oblique light angle", and the "smile intensity falls within the threshold. Therefore, the face-information data mutual comparison unit 401 counts the number of approximate items as "3". Similarly the face-information data mutual comparison unit 401 counts the numbers of approximate items between the registered image R101 and the registered images R204, R207, and R208 as "1", "3", and "2", respectively.

Then the face-information data mutual comparison unit 401 counts the numbers of approximate items between the registered image R102 and the registered images R201, R204, R207, and R208 as "2", "1", "1", and "3", respectively.

The face-information data mutual comparison unit 401 counts the numbers of approximate items between the registered image R103 and the registered images R201, R204, R207, and R208 as "1", "2", "1", and "1", respectively.

Then the reference registered image selection unit 402 selects the registered image with respect to the registered-people information P1 according to the comparison result of the face-information data mutual comparison unit 401, namely, the number of approximate items (S133).

For example, the reference registered image selection unit 402 selects the registered image in which the number of approximate items is counted as "3" in the comparison to one of the registered images R201, R204, R207, and R208. In Step S132, the number of approximate items is counted as "3" in the comparison of the registered image R101 to the registered images R201 and R207 and the comparison of the registered image R102 to the registered image R208. Therefore, the reference registered image selection unit 402 selects the registered images R101 and R102.

The face-information data mutual comparison unit 401 counts the number of approximate items of the face-information data with respect to the registered images R201, R204, R207, and R208 of the registered-people information P2 (S134). Because the number of approximate items of each of the registered images R201, R204, R207, and R208 is counted in Step S132, the face-information data mutual comparison unit 401 may use a counting result in Step S132.

The stranger registered image selection unit 403 selects the registered image with respect to the registered-people information P2 according to the comparison result of the face-information data mutual comparison unit 401, namely, the number of approximate items (S135).

At this point, for example, the stranger registered image selection unit 403 selects the registered image in which the number of approximate items is counted as "3" in the comparison to each of the registered images R101 to R103.

In Step S134, the number of approximate items is counted as "3" in the comparison of the registered image R201 to the registered image R101, the comparison of the registered image R207 to the registered image R101, and the comparison of the registered image R208 to the registered image R102. Therefore, the reference registered image selection unit 402 selects the registered images R201, R207, and R208.

The selection information setting unit 404 registers the pieces of identification information on the registered images R101 and R102, which are selected with respect to the registered-people information P1 by the reference registered image selection unit 402, and the pieces of identification information on the registered images R201, R207, and R208, which are selected with respect to the registered-people information P2 by the stranger registered image selection unit 403, as the selection information in the selection information storage unit 23 (S136).

### (Another configuration example of registered image selection unit)

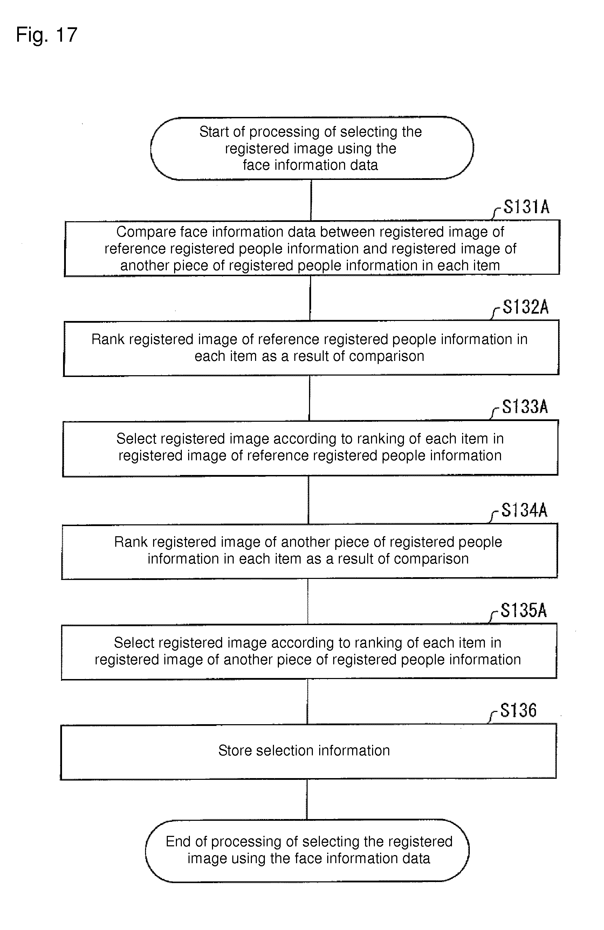

Another configuration example of the registered image selection unit 40 will be described below with reference to Fig. 17. In another configuration example, the registered image is ranked using the closeness of the face-information data, and the registered image is selected based on the ranking. In another configuration example, the functions of the face-information data mutual comparison unit 401, reference registered image selection unit 402, and stranger registered image selection unit 403 in Fig. 14 are changed as follows.

The face-information data mutual comparison unit 401 outputs the ranking of the closeness of the face-information data of the registered image as the comparison result. The ranking includes a reference ranking that is of a ranking of the registered image of the reference registered people information with respect to the registered image of another piece of registered people information and a stranger ranking that is of a ranking of the registered image of another piece of registered people information with respect to the registered image of the reference registered people information. The reference ranking technique and the stranger ranking technique are similar to those of the modification of the weighting determination unit 34.

For example, the face-information data mutual comparison unit 401 compares and ranks the face-information data between the reference registered people information and another piece of registered people information by the following procedure.

The face-information data mutual comparison unit 401 compares each registered image registered with respect to the reference registered people information and each registered image registered with respect to another piece of registered people information in each item, and performs the reference ranking of the registered image registered with respect to the reference registered people information.

The face-information data mutual comparison unit 401 compares each registered image registered with respect to the reference registered people information and each registered image registered with respect to another piece of registered people information in each item, and performs the stranger ranking of the registered image registered with respect to another piece of registered people information.

The reference registered image selection unit 402 selects the registered image with respect to the reference registered people information according to the reference ranking output from the face-information data mutual comparison unit 401. For example, the reference registered image selection unit 402 selects the registered image including the items that are ranked from the highest position to a predetermined rank.

The stranger registered image selection unit 403 selects the registered image with respect to another piece of registered people information according to the stranger ranking output from the face-information data mutual comparison unit 401. For example, the stranger registered image selection unit 403 selects the registered image including the items that are ranked from the highest position to a predetermined rank.

### [Flow of processing in the configuration example]

The detail of the "processing of selecting the registered image using the face-information data" performed by the registered image selection unit 40 of the configuration example will be described below with reference to Fig. 17. Fig. 17 is a flowchart illustrating the detail of the "processing of selecting the registered image using the face-information data".

As illustrated in Fig. 17, in the "processing of selecting the registered image using face-information data", the face-information data mutual comparison unit 401 compares the face image data between the registered image of the reference registered people information and the registered image of another piece of registered people information in each item (S131A).

The face-information data mutual comparison unit 401 performs the reference ranking with respect to the reference registered people information in each item according to the comparison result (S132A).

The reference registered image selection unit 402 selects the registered image with respect to the reference registered people information according to the reference ranking (S133A).

The face-information data mutual comparison unit 401 performs another ranking with respect to another piece of registered people information in each item according to the comparison result (S134A).

The stranger registered image selection unit 403 selects the registered image with respect to another piece of registered people information according to another ranking (S135A).

The selection information setting unit 404 registers the identification information on the registered image, which is selected with respect to the reference registered people information by the reference registered image selection unit 402, and the identification information on the registered image, which is selected with respect to the registered people information on the stranger by the stranger registered image selection unit 403, as the selection information in the selection information storage unit 23 (S136).

### [Third embodiment]

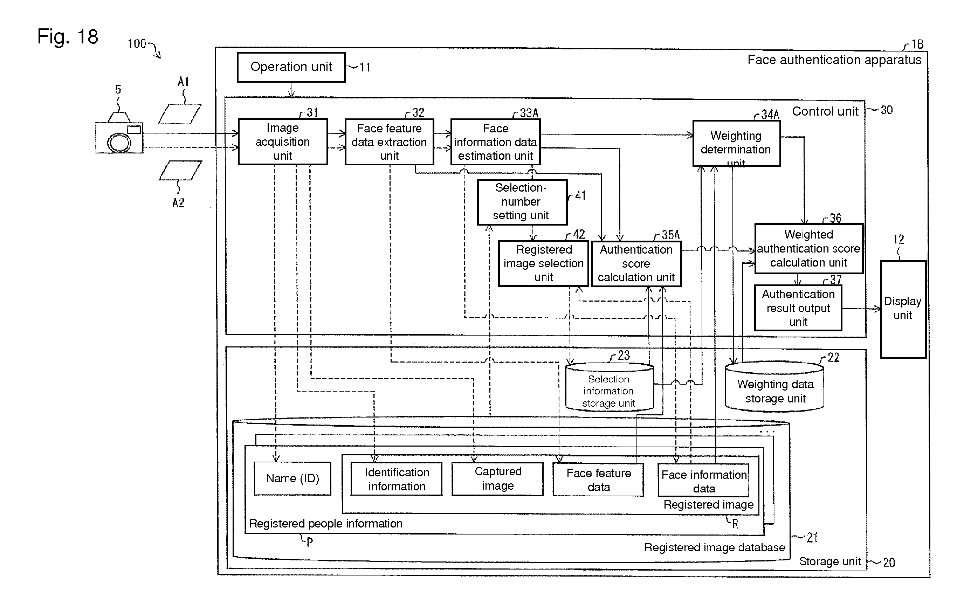

Still another embodiment of the present invention will be described below with reference to Figs. 18 to 24. For the sake of convenience, a component having the same function as the above embodiments is designated by the same numeral, and the description is omitted.

In the following embodiment, the registered image used to calculate the authentication score is previously selected under a predetermined condition while the numbers of registered images agree with each other, and the authentication is performed using the selected registered image.

A face authentication apparatus (the image authentication apparatus) 1 B in Fig. 18 differs from the face authentication apparatus 1 A in Fig. 10 in the following points. In the face authentication apparatus 1 B, a selection-number setting unit (the selection means) 41 is added to the face authentication apparatus 1A, and the registered image selection unit 40 is changed to the registered image selection unit (the selection means) 42. The selection-number setting unit 41 performs processing in the "face image registration processing". These different points will be described below.

The selection-number setting unit 41 counts the number of registered images registered in each piece of registered people information, and sets the number of selections based on the counting result. At this point, the selection-number setting unit 41 sets the number of selections such that the identical number of registered images is selected among the pieces of registered people information.

For example, the selection-number setting unit 41 sets the minimum number of registered images registered with respect to the registered people information to the number of selections. For example, the selection-number setting unit 41 may set a number smaller than the minimum number of registered images registered with respect to the registered people information to the number of selections. The selection-number setting unit 41 notifies the registered image selection unit 42 of the setting selection number.

The registered image selection unit 42 selects the identification information on the registered image that should be the processing target in the "face image recognition processing" according to the number of selections of which the selection-number setting unit 41 notifies the registered image selection unit 42. The registered image selection unit 42 selects the registered images by the number of selections such that the number of registered images selected among the pieces of registered people information registered in the registered image database 21 according to the setting number of selections becomes identical. The detailed registered image selection unit 42 will be described below.

The face-information data estimation unit 33A is changed so as to notify the selection-number setting unit 41 that the registration of the face-information data is ended in the "face image registration processing".

### (Configuration example of registered image selection unit)

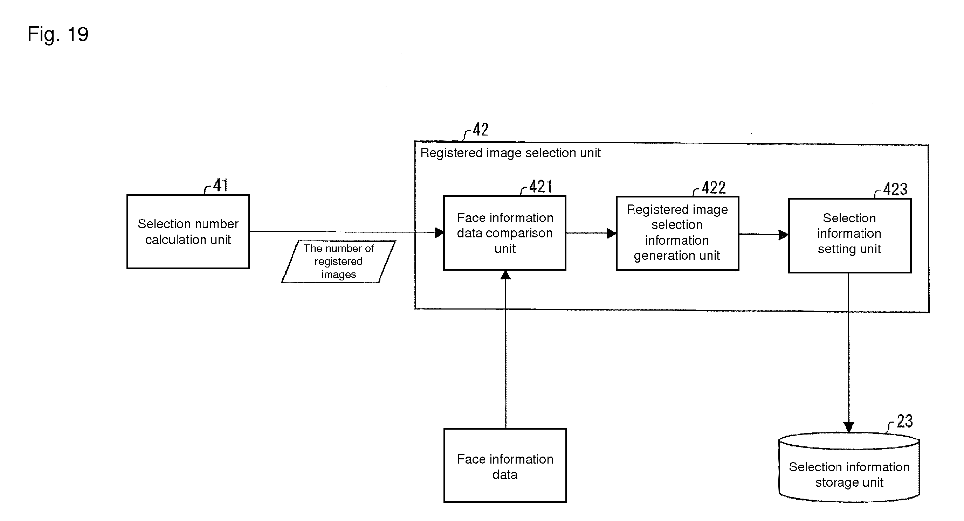

The detailed registered image selection unit 42 will be described below with reference to Figs. 19 to 23. Fig. 19 is a functional block diagram illustrating a detailed configuration example of the registered image selection unit 42.

As illustrated in Fig. 19, the registered image selection unit 42 includes a face-information data mutual comparison unit (the condition mutual determination means, mutual approximation number counting means, and the mutual ranking means) 421, a registered image selection information generation unit (photographing condition closeness mutual calculation means) 422, and a selection information setting unit 423.

The face-information data mutual comparison unit 421 compares the face-information data between the registered image of a certain piece of registered people information and the registered image of another piece of registered people information. The comparison technique in the face-information data mutual comparison unit 421 is similar to that of the face-information data mutual comparison unit 401. For example, the face-information data mutual comparison unit 421 outputs the number of approximate items as the comparison result like the face-information data mutual comparison unit 401.

For example, the face-information data mutual comparison unit 421 sets the registered people information, in which the number of registered images registered with respect to the registered people information is minimum, to the reference.

The registered image selection information generation unit 422 selects the registered images of the registered people information that becomes the reference and the registered images of another piece of registered people information by the number of selections according to the comparison result of the face-information data mutual comparison unit 421.

At this point, for example, the registered image selection information generation unit 422 selects the registered image of the registered people information that becomes the reference in the following way. That is, the registered image selection information generation unit 422 selects all the registered images of the registered people information that becomes the reference. In this case, the number of registered images of the registered people information that becomes the reference is equal to the number of selections of which the selection-number setting unit 41 notifies the registered image selection unit 42.

For example, the registered image selection information generation unit 422 selects the registered image of another piece of registered people information in the following way. That is, the registered image selection information generation unit 422 selects the registered image of another piece of registered people information, in which the number of approximate items of the comparison result agrees with or is similar to the number of approximate items of the registered image of the registered people information that becomes the reference in all the items, as the registered image that becomes the processing target.

The selection information setting unit 423 stores the identification information on the registered image, which is selected by the registered image selection information generation unit 422, as the selection information in the selection information storage unit 23.

### (Flow of face image registration processing)

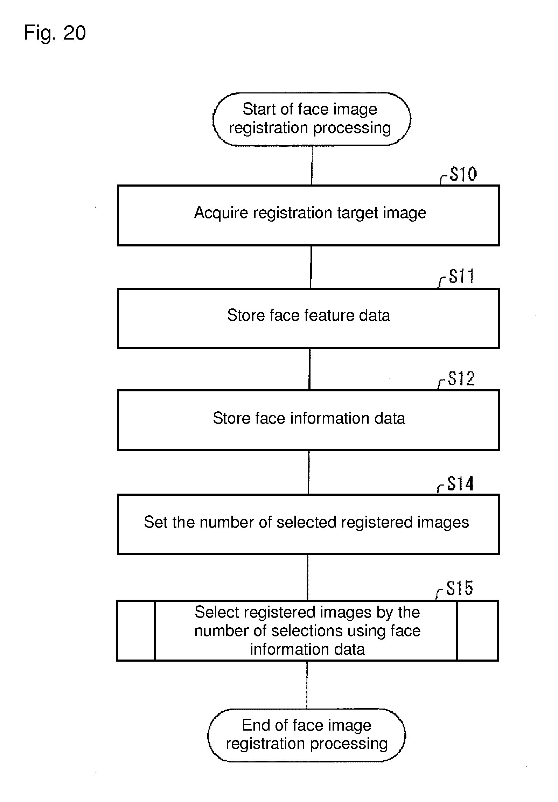

A flow of the face image registration processing in the face authentication apparatus 1 B will be described below with reference to Fig. 20. Fig. 20 is a flowchart illustrating the flow of the face image registration processing in the face authentication apparatus 1 B.

Because Steps S10 to S12 are already described in Fig. 3, the description is omitted. In Step S14 subsequent to Step S12, the selection-number setting unit 41 counts the registration number of registered images in each piece of registered people information, and sets the number of selections according to the counting result.

The registered image selection unit 42 selects the registered images by the number of selections using the face-information data (S15). A detail of the "processing of selecting the registered images by the number of selections using the face-information data" is described later. Therefore, the face image registration processing is ended.

### (Flow of processing of selecting registered images by the number of selections using face-information data)

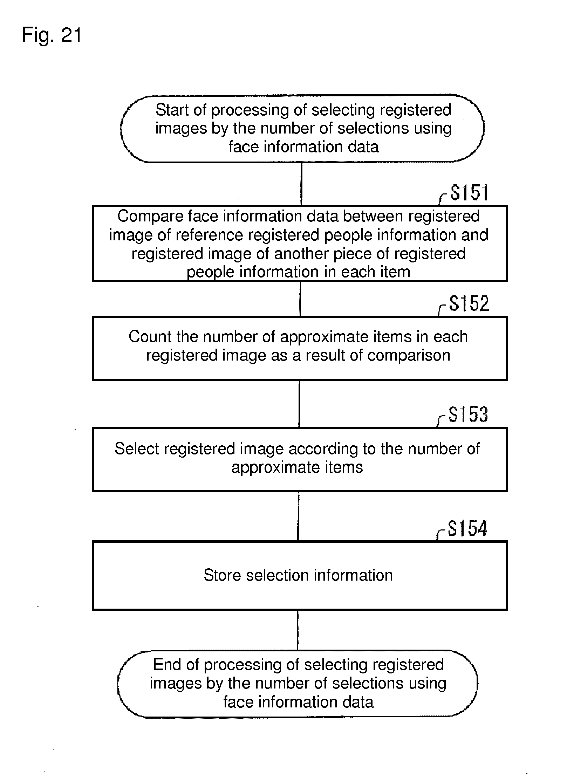

The detail of the "processing of selecting the registered images by the number of selections using the face-information data" in the registered image selection unit 42 will be described below with reference to Fig. 21. Fig. 21 is a flowchart illustrating the detail of the "processing of selecting the registered images by the number of selections using the face-information data".

As illustrated in Fig. 21, in the "processing of selecting the registered images by the number of selections using the face-information data", the face-information data mutual comparison unit 421 compares the face-information data between the registered image of the registered people information that becomes the reference and the registered image of another piece of registered people information in each item based on a certain piece of registered people information (S151).

The face-information data mutual comparison unit 401 counts the number of approximate items of the face-information data from the comparison result in each registered image of another piece of registered people information (S152).

The registered image selection information generation unit 422 selects the registered image according to the number of approximate items (S153). That is, the registered image selection information generation unit 422 generates the selection information including the identification information on the registered image according to the number of approximate items counted by the face-information data mutual comparison unit 401.

The selection information setting unit 423 stores the selection information generated by the registered image selection information generation unit 422 in the selection information storage unit 23 (S154). Therefore, the processing is ended.

### (Flow of face image authentication processing)

A flow of the face image authentication processing in the face authentication apparatus 1 B will be described below. The face image authentication processing in Fig. 12 can directly be applied to the face image authentication processing in the face authentication apparatus 1 B.

Therefore, the detailed face image authentication processing is omitted.

### (Working example)

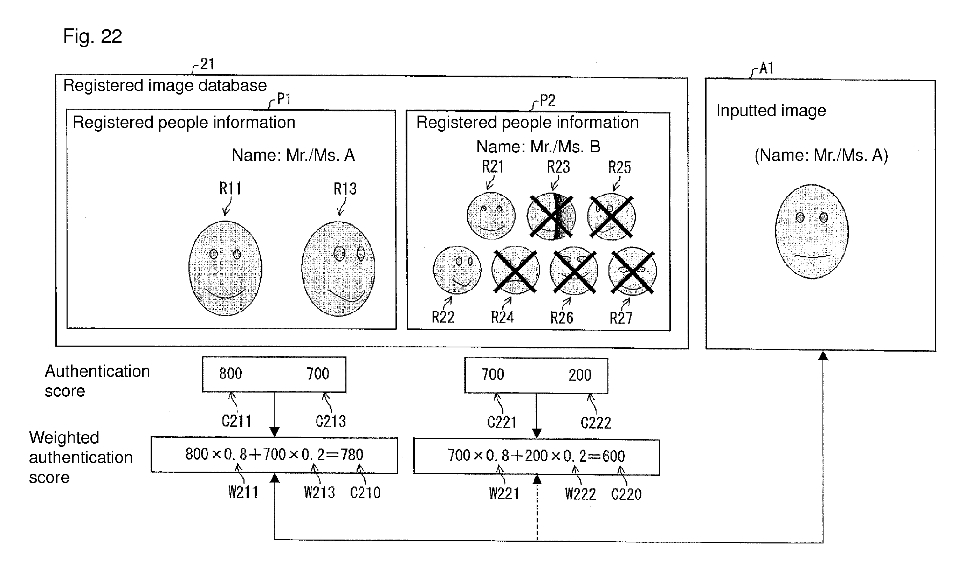

A working example of the face image registration processing and face image authentication processing in the face authentication apparatus 1 B will be described below with reference to Fig. 22. The face image registration processing and the face image authentication processing are described in this order.

First, how the registered image selection unit 42 selects the registered image under the following precondition in the face image registration processing will be described along the flowcharts in Figs. 20 and 21.

As illustrated in Fig. 22, the registered-people information P1 (Mr./Ms. A) and the registered-people information P2 (Mr./Ms. B) are registered as the precondition in the registered image database 21 through Steps S10 to S12 in the face image registration processing in Fig. 20.

Although not illustrated in detail, it is assumed that the face-information data of the registered image, which is registered with respect to the registered-people information P1 and the registered-people information P2, includes items of the "lighting condition" and the "facial orientation".

The registered image R11 and R13 are registered with respect to the registered-people information P1. Because the item of the face-information data of each of the registered images R11 and R13 is identical to that in Fig. 13, the description is omitted.

The registered images R21 to R27 are registered with respect to the registered-people information P2. Because the item of the face-information data of each of the registered images R21 to R25 is identical to that in Figs. 5 and 16, the description is omitted.

The "homogeneous light" and an "upward view" are set to the "lighting condition" and the "facial orientation" of the registered image R26, respectively. The "homogeneous light" and a "downward view" are set to the "lighting condition" and the "facial orientation" of the registered image R27, respectively.

The inputted image A1 that becomes the authentication target is the image in which "Mr./Ms. A" is photographed from the front side under the homogeneous light.

Under the precondition, the selection-number setting unit 41 counts the registration number of registered images in each of the pieces of registered-people information P1 and P2, and sets the number of selections according to the counting result.(S14). The registration number of registered images of the registered-people information P1 is "2", and the registration number of registered images of the registered-people information P2 is "7". Therefore, the selection-number setting unit 41 sets "2", which is the small registration number of registered images, to the number of selections.

The face authentication apparatus 1 B performs the processing of selecting the registered images by the number of selections using the face-information data (S15).

More specifically, the face-information data mutual comparison unit 421 compares the face-information data between each of the registered images R11 and R13 of the registered-people information P1 and each of the registered images R21 to R27 of the registered-people information P2 based on the registered-people information P1 (S151), and counts the number of approximate items (S152).

That is, the two items of the "lighting condition" and the "facial orientation", which are included in the face-information data of the registered image R11, are approximate to those of the registered image R21. The two items of the "lighting condition" and the "facial orientation", which are included in the face-information data of the registered image R12, are approximate to those of the registered image R22.

Therefore, the face-information data mutual comparison unit 421 outputs the number of approximate items of "2" with respect to the registered image R11 and the registered image R21. The face-information data mutual comparison unit 421 also outputs the number of approximate items of "2" with respect to the registered image R12 and the registered image R22.

The face-information data mutual comparison unit 421 outputs the number of approximate items of "1" or less in other comparison of the face-information data between the registered images.

The registered image selection information generation unit 422 generates the selection information including the identification information on the registered image according to the number of approximate items counted by the face-information data mutual comparison unit 401 (S153).

That is, the registered image selection information generation unit 422 generates the selection information including the pieces of identification information on the registered images R11, R12, R21, and R22 in each of which the number of approximate items of "2" is counted.

The selection information setting unit 423 stores the selection information including the pieces of identification information on the registered images R11, R12, R21, and R22 in the selection information storage unit 23 (S154). Therefore, the face image registration processing is ended while the processing of selecting the registered images by the number of selections using face-information data is ended.

Secondly, how the face authentication apparatus 1 B performs the face image authentication processing under the precondition will be described with reference to Fig. 12.

Because Steps S20 to S22 in Fig. 12 are already described, the description is omitted.

Subsequent to Step S22, the weighting determination unit 34A determines the weighting in each registered image by comparing the face-information data of the inputted image A and the face-information data of the registered image (S23A). Because Step 23A is similar to Step S23 in Fig. 5, the description is omitted.

As a result, in Step S23B, the weighting determination unit 34A allocates "0.8" to a weighting W211 of the registered image R11, and allocates "0.2" to a weighting W213 of the registered image R13. The weighting determination unit 34 allocates "0.8" to a weighting W221 of the registered image R21, and allocates "0.2" to a weighting W222 of the registered image R22.

Then the authentication score calculation unit 35A calculates the authentication score by sequentially comparing the inputted image A1 to the registered images R11 and R13 selected with respect to the registered-people information P1 and the registered images R21 and R22 selected with respect to the registered-people information P2 (S24A). Because Step 24A is similar to Step S24 in Fig. 5, the description is omitted.

As a result, in Step S24B, the authentication score calculation unit 35A calculates that an authentication score C211 of the registered image R11 is "800", and calculates that an authentication score C213 of the registered image R13 is "700". The authentication score calculation unit 35A calculates that an authentication score C221 of the registered image R21 is "700", and calculates that an authentication score C222 of the registered image R23 is "200".

The following pieces of processing in Steps S25 and S26 are performed as described in Fig. 5. In Step S25, from the results in Steps S23B and S24B, the weighted authentication score calculation unit 36 calculates that a weighted authentication score C21 0 of the registered-people information P1 is "780", and calculates that a weighted authentication score C220 of the registered image P2 is "600".

In Step S26, the authentication result output unit 37 returns the name "Mr./Ms. A" of the registered-people information P1 from the result in Step S25.

### (Modification)

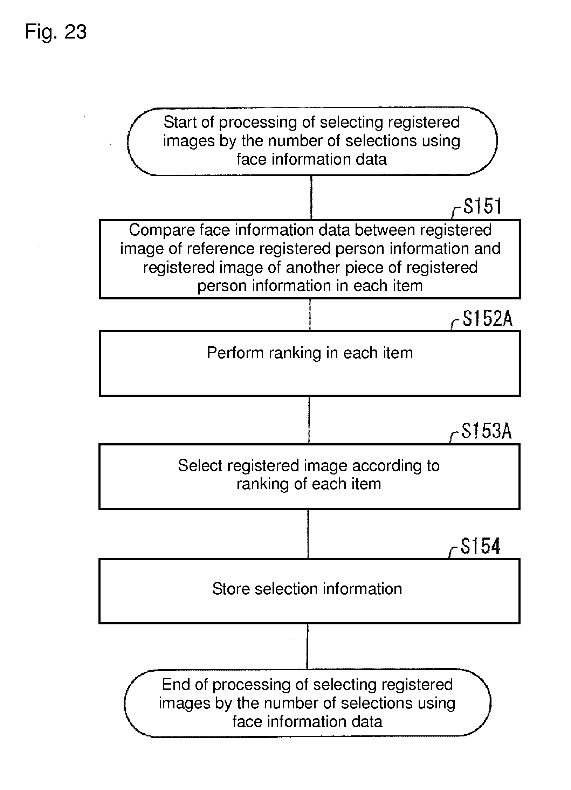

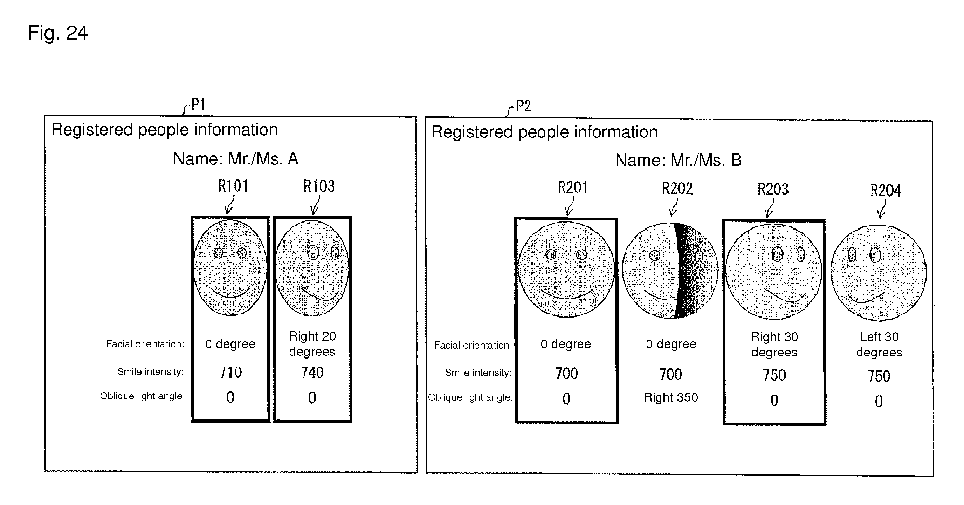

A modification of the registered image selection unit 42 will be described below with reference to Figs. 23 and 24. In the modification, the registered image is ranked using the closeness of the face-information data, and the registered image is selected based on the ranking. In the modification, the functions of the face-information data mutual comparison unit 421 and registered image selection information generation unit 422 in Fig. 18 are changed as follows.

The face-information data mutual comparison unit 421 outputs the ranking of the closeness of the face-information data of the registered image as the comparison result in each item. Specifically, the ranking output from the face-information data mutual comparison unit 421 is the ranking of the registered image of another piece of registered people information with respect to the registered image of the registered people information that becomes the reference.

The ranking technique is similar to that of the modification of the weighting determination unit 34. In the case that the closeness of the face-information data is determined to be close between the registered images even if the ranking is not performed, the ranking may randomly be performed.

The registered image selection information generation unit 422 selects the registered images with respect to the reference registered people information and another piece of registered people information according to the ranking in each item, which is output from the face information data mutual comparison unit 421.

For example, the registered image selection information generation unit 422 selects the registered image in the following way. The registered image selection information generation unit 422 calculates an overall rank in each registered image of another piece of registered people information according to the ranking of each item.

For example, the registered image selection information generation unit 422 calculates the overall rank in the following way. The registered image selection information generation unit 422 allocates the higher overall rank to the registered image having the most firsts in the ranking of each item.

For example, the registered image selection information generation unit 422 also calculates the overall rank in the following way. The registered image selection information generation unit 422 calculates the overall rank based on the sum of points, which are allocated according to the ranking of each item.

Specifically, the registered image selection information generation unit 422 adds 10 points when the ranking of each item is the first, adds 5 points when the ranking of each item is the second, and adds 1 point when the ranking of each item is the third. The registered image selection information generation unit 422 calculates the overall rank in the descending order of the added point.

In this case, it is assumed that the number of registered images is 10 while the number of items of the face-information data is 3. When the rankings of the items are the first, the tenth, and the tenth in the first registered image, and when the rankings of the items are the second, the second, and the second in the second registered image, the registered image selection information generation unit 422 calculates the overall rank in the following way.

The registered image selection information generation unit 422 calculates 10 points with respect to the first registered image, and calculates 15 points with respect to the second registered image. Because the point of the second registered image is higher than that of the first registered image, the registered image selection information generation unit 422 sets the overall rank of the second registered image higher than that of the first registered image.

The registered image selection information generation unit 422 may allocate the higher overall rank to the registered image having the lower sum of the points. For example, the ranking of each item may directly be used as the point. That is, in this case, 1 point is added to the registered image when the ranking of each item is the first, and 2 points are added to the registered image when the ranking is the second.

For example, the registered image selection information generation unit 422 selects the registered images having the overall ranks from the top to a predetermined rank. Alternatively, the registered image selection information generation unit 422 may select only the registered image in which the overall rank is the first.

### [A flow of processing of modification]

The detail of the "processing of selecting the registered images by the number of selections using the face-information data" performed by the registered image selection unit 42 of the configuration example will be described below with reference to Fig. 23. Fig. 23 is a flowchart illustrating the detail of the "processing of selecting the registered images by the number of selections using the face-information data".

As illustrated in Fig. 23, in the "processing of selecting the registered images by the number of selections using the face-information data", the face-information data mutual comparison unit 421 compares the face image data between the registered image of the registered people information that becomes the reference and the registered image of another piece of registered people information in each item (S151A).

The face-information data mutual comparison unit 421 performs the ranking with respect to another piece of registered people information in each item according to the comparison result (S152A).

The registered image selection information generation unit 422 selects the registered images with respect to the registered people information that becomes the reference and another piece of registered people information according to the ranking of each item, and generates the selection information including the pieces of identification information on the selected registered images (S153A).

The selection information setting unit 423 registers the selection information generated by the registered image selection information generation unit 422 in the selection information storage unit 23 (S154).

### [Working example of modification]

A working example of the "processing of selecting the registered images by the number of selections using the face-information data" of the modification will be described below with reference to Fig. 24. In the working example, how to select the registered image under the following precondition will be described along the flowchart in Fig. 23.

As illustrated in Fig. 24, the registered-people information P1 and the registered-people information P2 are registered in the registered image database 21. Registered image R101 and R103 are registered with respect to the registered-people information P1. The registered images R201 to R204 are registered with respect to the registered-people information P2.

The items of the "facial orientation", the "smile intensity", and the "oblique light angle" are included in the face-information data of the registered image. The continuous value is used in the setting value of the item. Fig. 26 illustrates the specific setting value of each registered image. Because the setting value is already described with reference to Fig. 22, the description is omitted.

In the following example, it is also assumed that "10 degrees", "15", and "110" are set to the items of the "facial orientation", the "smile intensity", and the "oblique light angle" as the thresholds used by the face-information data mutual comparison unit 421.

Under the precondition, the registered image selection unit 42 performs the "processing of selecting the registered images by the number of selections using the face-information data".

The face-information data mutual comparison unit 421 compares the face-information data between the registered images R101 and R103 of the registered-people information P1 that becomes the reference and the registered images R201 to R204 of the registered-people information P2 in each item (S151).

That is, the face-information data mutual comparison unit 421 compares the face-information data of the registered image R101 to the face-information data of each of the registered images R201 to R204. The same holds true for the registered image R103.

The face-information data mutual comparison unit 421 ranks the registered images of the registered-people information P2 in each item according to the comparison result (S152A).

The ranking in the comparison to the registered image R101 will be described below. The "facial orientation" and the "oblique light angle" of the registered image R201 agree with those of the registered image R101, and the "smile intensity" has the difference of "10". Therefore, in the comparison to the registered image R101, the "facial orientation" and the "oblique light angle" of the registered image R201 are ranked as the first. The "smile intensity" of the registered image R201 is ranked as the second.

The ranking in the comparison to the registered image R103 will be described below. The "facial orientation" and the "oblique light angle" of the registered image R203 agree with those of the registered image R103, and the "smile intensity" has the difference of "10". Therefore, in the comparison to the registered image R103, each item of the registered image R203 is ranked as the first.

The registered image selection information generation unit 422 selects the registered images with respect to the registered-people information P1 and the registered-people information P2 according to the ranking of each item, and generates the selection information including the pieces of identification information on the selected registered images(S153A).

At this point, the overall rank is calculated with respect to the registered images of the registered-people information P2, and the registered image is selected based on the overall rank. That is, in the comparison to the registered image R101, the highest overall rank is allocated to the registered image R201 including the most firsts. In the comparison to the registered image R103, the highest overall rank is allocated to the registered image R203 including the most firsts.

Therefore, the registered image selection information generation unit 422 selects the registered images R101 and R103 with respect to the registered-people information P1 that becomes the reference. The registered image selection information generation unit 422 selects the registered images R201 and R203 with respect to the registered-people information P2 based on the overall rank.

As a result, the registered image selection information generation unit 422 generates the selection information including the pieces of identification information on the registered images R101, R103, R201, and R203.

The selection information setting unit 423 registers the selection information including the pieces of identification information on the registered images R101, R103, R201, and R203 in the selection information storage unit 23 (S154).

### (Means for solving the problem)

In order to solve the problem, an image authentication apparatus according to the present invention, that authenticates an object photographed in an inputted image by checking the inputted image in a registered image database, a registered image obtained by photographing the object and a photographing condition relating to the object of the registered image being registered in the registered image database while correlated with each other, the image authentication apparatus includes: inputted image photographing condition acquisition means for acquiring the photographing condition relating to the object of the inputted image; registered image photographing condition acquisition means for acquiring the photographing condition of the registered image stored in the registered image database; weighting determination means for determining weighting corresponding to closeness between the photographing condition of the registered image and the photographing condition of the inputted image; similarity calculation means for calculating a degree of similarity between the inputted image and the registered image; weighting application means for applying the degree of similarity calculated by the similarity calculation means to the weighting determined with respect to the corresponding registered image; and image authentication means for checking the inputted image based on the degree of similarity to which the weighting is applied.

In order to solve the problem, an image authentication method according to the present invention for authenticating an object photographed in an inputted image by checking the inputted image in a registered image database, the image authentication method includes: an inputted image photographing condition acquisition step of acquiring the photographing condition relating to the object of the inputted image; a registered image photographing condition acquisition step of acquiring the photographing condition of the registered image by referring to the registered image database, in which a registered image obtained by photographing the object and a photographing condition with respect to the object of the registered image are stored while correlated with each other; a weighting step of determining weighting corresponding to closeness between the photographing condition of the registered image and the photographing condition of the inputted image; a similarity calculation step of calculating a degree of similarity between the inputted image and the registered image; a weighting application step of applying the degree of similarity calculated by the similarity calculation step to the weighting determined with respect to the corresponding registered image; and an image authentication step of checking the inputted image based on the degree of similarity to which the weighting is applied.

As used herein, checking the inputted image in the registered image database means processing of specifying which one of the objects registered in the registered image database is included in the inputted image by determining the degree of similarity between the inputted image and the registered image or processing of selecting a candidate specifying the inputted image.

For example, the degree of similarity means what is called an authentication score that is obtained by comparing a feature quantity extracted from the inputted image and a feature quantity extracted from the registered image.

The object means a body, such as a person and a vehicle, in which a pattern can be recognized. The object may be part of a certain object. For example, when the object is a person, the face of the person can be cited as an example of part of a certain object.

According to the configuration, the photographing condition of the inputted image is acquired, and the photographing condition of the registered image is acquired from the registered image database.

As used herein, the photographing condition relates to the object, and means an environment or a state in photographing the object. The photographing condition in photographing the object includes a condition relating to the environment during the photographing and a condition relating to the state of the object that becomes a subject.

In the case that the object is the person, a facial orientation of the person, namely, an orientation of photographing means such as a camera with respect to the person can be cited as an example of the condition relating to the environment during the photographing. A facial expression, orientation/intensity of lighting, a degree of oblique light, and a degree of shade can also be cited as the condition relating to the environment during the photographing.

Conditions, such as an estimated age and a sex of the person, which can be estimated from an exterior of the person, can be cited as the condition relating to the state of the person that becomes the subject.

The photographing condition may take a continuous value with predetermined accuracy or may be a classification indicating which categorized condition the photographing condition belongs to.

A photographing angle of the object can be cited as an example of the continuous value. For example, the angle of the facial orientation can be cited in the case that the object is the person. In this case, the angle may be an integral value. In the case that the integral value of the angle is used as the photographing condition, actually the value may be set with accuracy of "each 5 degrees", or discrete values such as "15 degrees, 20 degrees, 25 degrees, ..." may be set. Alternatively, the angle may have the accuracy of the number of decimal places.

In the case that the object is the person, the sex of the person and a rough orientation of the face can be cited as an example of the classification. The rough orientation of the face means the classification indicating the front view, the view facing right, or the view facing left.

The photographing condition may be extracted from the image in which the object is photographed by a well-known algorithm, or manually be input.

In the configuration, for example, the weighting is determined based on the closeness between the photographing condition of the registered image and the photographing condition of the inputted image. The closeness of the photographing condition means the closeness of the angle in the case of the angle of the facial orientation of the person. The closeness of the photographing condition may previously be defined in the case of the rough orientation of the face. For example, a relationship between the right view and the front view may be defined to be closer than a relationship between the left view and the right view.

In the configuration, the photographing condition of the registered image is acquired to calculate the weighting and the degree of similarity in each object. The weighting is applied to the degree of similarity of the registered image to perform the checking in the registered image database.

During the checking, the weighting emphasizes the registered image having the photographing condition closer to the photographing condition of the inputted image. On the other hand, during the checking, the weighting weakens an influence on the registered image having the photographing condition farther from the photographing condition of the inputted image.

As a result, the possibility of falsely recognizing the object photographed on a certain photographing condition as another object due to the existence of the registered image, which is registered with respect to the object photographed on the photographing condition identical or similar to the certain photographing condition, can be reduced.

From the other view point, the possibility of incorrectly performing the authentication due to the difference between the photographing condition of the inputted image and the photographing condition of the registered image even if the object of the inputted image is identical to the object of the registered image can be reduced.

In the image authentication apparatus of the present invention, preferably a plurality of registered images obtained by photographing the object are registered in the registered image database with respect to at least one object.

In the configuration, the plurality of registered images obtained by photographing the object are registered in the registered image database with respect to at least one object. That is, there are a plurality of registrations in each of which the registered image and the photographing condition relating to the object of the registered image are correlated with each other with respect to at least one object.

Therefore, for example, the weighting is determined with respect to the plurality of registered images. For example, the degree of similarity is calculated in each registered image. The checking is performed based on the degree of similarity to which the weighting is applied.

At this point, the degree of similarity used in the checking may be calculated by adding the degree of similarity to which the weighting is applied. A total value of 1 may be used in the weighting applied to each registered image. That is, the degree of similarity used in the checking may be calculated by weighted mean.

According to the configuration, checking accuracy can be improved with respect to a certain object in the case that the different photographing conditions are registered together with the registered image.

Preferably the image authentication apparatus of the present invention further includes selection means for selecting the registered image to which the weighting should be applied from the plurality of registered images, which are registered with respect to each object according to photographing condition closeness that is of the closeness between the photographing condition of the registered image registered with respect to one object and the photographing condition of the registered image registered with respect to another object, wherein the weighting application means applies the weighting to the degree of similarity that is calculated with respect to the registered image selected by the selection means.

According to the configuration, the weighting is applied to the degree of similarity, which is calculated with respect to the registered image selected according to the photographing condition closeness. The number of selected registered images may depend on the object, or be identical among the objects.

As used herein, from the other viewpoint, the selection of the registered image means that the degree of similarity calculated with respect to the selected registered image is used in the checking. In other words, the degree of similarity calculated with respect to the non-selected registered image is ignored in the checking.

Therefore, for example, "the selection of the registered image" includes a non-zero value of a coefficient of the weighting, which is applied to the degree of similarity calculated with respect to the registered image. For example, "the non-selection of the registered image" includes a zero value of the coefficient of the weighting, which is applied to the degree of similarity calculated with respect to the registered image.

In the checking of the inputted image, the photographing conditions of the registered images used in the checking can be adjusted to some extent among the objects.

As a result, the false recognition of the identical object as the different object or the false recognition of the different object as the identical object due to the difference of the photographing condition can be prevented.

In the image authentication apparatus of the present invention, preferably the selection means selects the identical number of registered images with respect to each object.

According to the configuration, the numbers of selected registered images can be equalized to each other in the objects. For example, the number of selections can be equalized to the smallest number of registered images of the object. The number of selections is one in the case of the object in which only one registered image is registered.

At least one registered image is selected in each object.

Therefore, the object, which has the small number of registered images and in which the photographing condition of the registered image is at least a predetermined distance away from the photographing condition of the inputted image can be prevented from dropping off from the checking target.

Preferably the image authentication apparatus of the present invention further includes: photographing condition approximation determination means for determining whether the photographing condition of the registered image registered with respect to one object is approximate to the photographing condition of the registered image registered with respect to another object; and photographing condition closeness calculation means for calculating the photographing condition closeness according to the number of times in each of which the photographing condition approximation determination means determines that the photographing condition of the registered image registered with respect to one object is approximate to the photographing condition of the registered image registered with respect to another object.

In the configuration, whether the photographing condition of the registered image registered with respect to one object is approximate to the photographing condition of the registered image registered with respect to another object is determined. The number in which the photographing conditions are determined to be approximate to each other is counted to be able to specifically calculate the photographing condition closeness.

As described above, sometimes the photographing condition includes a plurality of conditions such as the facial expression, the orientation/intensity of lighting, the degree of oblique light, and the degree of shade.

According to the configuration, for example, even if the photographing condition includes the plurality of conditions, the photographing condition closeness between the registered images can specifically be calculated according to the counted number.

In the case that the photographing condition includes the plurality of conditions, for example, in the case that the number of conditions determined to be approximate to each other is increased, a value indicating that the photographing conditions are closer to each other can be calculated. The configuration includes a configuration in which the photographing condition is used as the selection target of the selection means when all the conditions included in the photographing condition are approximate to one another.

The configuration and a configuration in which data sorting processing is performed in order to perform the ranking in each condition are compared as follows.

In the configuration in which the sorting processing is performed, it is assumed that a large part of an electronic calculator resource is used in the sorting processing when the image authentication apparatus is considered as the electronic calculator. On the other hand, in the configuration, only the determination result is counted, so that the electronic calculator resource used in the sorting processing can be reduced.

Preferably the image authentication apparatus of the present invention further includes: registration condition ranking means for ranking the closeness between the photographing condition of the registered image registered with respect to one object is approximate to the photographing condition of the registered image registered with respect to another object; and photographing condition closeness calculation means for calculating the photographing condition closeness according to the ranking performed by the registration condition ranking means.

In the configuration, the closeness between the photographing condition of the registered image registered with respect to one object and the photographing condition of the registered image registered with respect to another object is ranked. The specific photographing condition closeness can be calculated according to the ranking of the closeness.

According to the configuration, for example, even if the photographing condition includes the plurality of conditions, the photographing condition ranking between the registered images can specifically be defined. In such cases, the photographing condition closeness is calculated according to the ranking defined in each condition. For example, it is calculated that the photographing conditions including more higher-ranked conditions are approximate to each other in the photographing condition closeness. The configuration includes a configuration in which the photographing condition including more highest-ranked conditions is used as the selection target of the selection means.

Preferably the image authentication apparatus of the present invention further includes: input condition determination means for determining whether the photographing condition of the inputted image is approximate to the photographing condition of the registered image; and closeness calculation means for calculating the closeness between the photographing condition of the inputted image and the photographing condition of the registered image according to the number of times in each of which the photographing condition of the inputted image is approximate to the photographing condition of the registered image, wherein the weighting determination means determines the weighting according to the closeness calculated by the closeness calculation means.

In the configuration, whether the photographing condition of the inputted image is approximate to the photographing condition of the registered image is determined. The number in which the photographing conditions are determined to be approximate to each other is counted to be able to specifically calculate the closeness between the photographing condition of the inputted image and the photographing condition of the registered image.

According to the configuration, for example, even if the photographing condition includes the plurality of conditions, the closeness can specifically be calculated according to the counted number.

In the case that the photographing condition includes the plurality of conditions, for example, in the case that the number of conditions determined to be approximate to each other is increased, the value indicating that the photographing conditions are closer to each other can be calculated.

The configuration and the configuration in which the data sorting processing is performed in order to perform the ranking in each condition are compared as follows.

In the configuration in which the sorting processing is performed, it is assumed that a large part of an electronic calculator resource is used in the sorting processing when the image authentication apparatus is considered as the electronic calculator. On the other hand, in the configuration, only the determination result is counted, so that the electronic calculator resource used in the sorting processing can be reduced.

Preferably the image authentication apparatus of the present invention further includes: input condition ranking means for ranking the closeness between the photographing condition of the inputted image and the photographing condition of the registered image; and closeness calculation means for calculating the closeness between the photographing condition of the inputted image and the photographing condition of the registered image according to the ranking performed by the input condition ranking means, wherein the weighting determination means determines the weighting according to the closeness calculated by the closeness calculation means.

In the configuration, the closeness between the photographing condition of the inputted image and the photographing condition of the registered image is ranked. In the configuration, the closeness between the photographing condition of the inputted image and the photographing condition of the registered image is specifically calculated according to the ranking.

According to the configuration, for example, even if the photographing condition includes the plurality of conditions, the photographing condition ranking between the registered images can specifically be defined. In such cases, the photographing condition closeness is calculated according to the ranking defined in each condition. For example, it is calculated that the photographing conditions including more higher-ranked conditions are approximate to each other in the photographing condition closeness. The configuration includes a configuration in which the photographing condition including more highest-ranked conditions is used as the selection target of the selection means.

In the image authentication apparatus of the present invention, preferably the photographing condition of the registered image includes a plurality of conditions.

According to the configuration, the approximation determination or the ranking is performed to the plurality of conditions included in the photographing condition. The closeness or the photographing condition closeness is calculated based on the approximation determination or the ranking. The closeness is calculated from the plurality of conditions, so that the accuracy of the calculated closeness can be improved.

In the image authentication apparatus of the present invention, preferably the object is a face of a person.

That is, in the configuration, the inputted image is the face image in which the face of the person is photographed, and the face image obtained by photographing the face of the people in each person is registered in the registered image database.

According to the configuration, advantageously the face of the people can be checked with high accuracy.

An image processing system includes: the image authentication apparatus; and an image input apparatus that supplies the inputted image to the image authentication apparatus.

A printer, a scanner, a personal computer, and a digital camera, which process the digital image, can be cited as an example of the image processing system. The image authentication apparatus and the image input apparatus may be connected to each other through a communication network.

Additionally, the image authentication apparatus may be implemented by a computer. In this case, a control program for image authentication apparatus, which causes a computer to implement the image authentication apparatus by operating the computer as each means, and a computer-readable recording medium which records the program are also included in the present invention.

### (Conclusion)

The present invention is not limited to the embodiments, but various changes can be made without departing from the scope of the present invention. That is, an embodiment obtained by a combination of technical means disclosed in different embodiments is also included in the technical scope of the present invention.

Each block of the face authentication apparatuses 1, 1 A, and 1 B, particularly the image acquisition unit 31, the face feature data extraction unit 32, the face-information data estimation unit 33, the weighting determination units 34 and 34A, the authentication score calculation units 35 and 35A, the weighted authentication score calculation unit 36, the authentication result output unit 37, the registered image selection units 40 and 42, and the selection-number setting unit 41 may be constructed by a hardware logic, or by software using a CPU as follows.

That is, the face authentication apparatuses 1, 1 A, and 1 B include the CPU that executes a command of the control program implementing each function, the ROM (Read Only Memory) in which the control program is stored, the RAM (Random Access Memory) in which the control program is expanded, and the storage device (the recording medium), such as a memory, in which the control program and various pieces of data are stored. The object of the present invention can also be achieved in a manner such that the recording medium in which a program code (an executable format program, an intermediate code program, a source program) of the control program for the face authentication apparatuses 1, 1 A, and 1 B, which are of the software implementing the above functions, is stored while being readable by a computer is supplied to the face authentication apparatuses 1, 1 A, and 1 B, and such that the computer (or the CPU or an MPU) reads and executes the program code recorded in the recording medium.

Examples of the recording medium include tape systems such as a magnetic tape and a cassette tape, disk systems including magnetic disks such as a floppy disk (registered trademark) and a hard disk and optical disks such as a CD-ROM, an MO an MD, a DVD, and a CD-R, Blu-ray disk (registered trademark), card systems such as an IC card (including a memory card) and an optical card, and semiconductor memory systems such as a mask ROM, an EPROM, an EEPROM and a flash ROM.

The face authentication apparatuses 1, 1 A, and 1 B may be configured to be able to be connected to a communication network, and the program code may be supplied through the communication network. There is no particular limitation to the communication network. Examples of the communication network include the Internet, an intranet, an extranet, a LAN, an ISDN, a VAN, a CATV communication network, a virtual private network, a telephone line network, a mobile communication network, and a satellite communication network. There is no particular limitation to a transmission medium constituting the communication network. Examples of the transmission medium include wired lines, such as IEEE 1394, a USB, a power-line carrier, a cable TV line, a telephone line, and an ADSL line, and wireless lines, such as infrared rays, such as IrDA and a remote controller, Bluetooth (registered trademark), 802.11 wireless, HDR, a mobile phone network, a satellite line, and a terrestrial digital network. The present invention can be implemented by a mode of a computer data signal buried in a carrier wave, and the computer data signal is one in which the program code is embodied by electronic transmission.

### INDUSTRIAL APPLICABILITY

Because the present invention can be used in the authentication of the object included in the image, the present invention is suitably applied to digital image devices constructed by a printer, a scanner, a personal computer, and the like, digital cameras, and security systems.

### DESCRIPTION OF SYMBOLS

1,1A,1B Face authentication apparatus (image authentication apparatus)
5 Image input apparatus
20 Storage unit
21 Registered image database
22 Weighting data storage unit
23 Selection information storage unit
30 Control unit
31 Image acquisition unit
32 Face feature data extraction unit
33 Face-information data estimation unit (inputted image photographing condition acquisition means and registered image photographing condition acquisition means)
34,34A Weighting determination unit (weighting determination means)
341 Face-information data comparison unit (input condition determination means, input condition ranking means, and closeness calculation means)
342 Weighting calculation unit (weighting determination means)
343 Weighting output unit
35,35A Authentication score calculation unit (similarity calculation means)
36 Weighted authentication score calculation unit (weighting application means)
37 Authentication result output unit (image authentication means)
40 Registered image selection unit (selection means)
100 Face authentication system
401 Face-information data mutual comparison unit (photographing condition approximation determination means and registration condition ranking means)
402 Reference registered image selection unit (photographing condition closeness calculation means)
403 Stranger registered image selection unit (photographing condition closeness calculation means)
404 Selection information setting unit
41 Selection-number setting unit (selection means)
42 Registered image selection unit (selection means)
421 Face-information data mutual comparison unit (condition mutual determination means, mutual approximation number counting means, and mutual ranking means)
422 Registered image selection information generation unit (photographing condition closeness mutual calculation means)
423 Selection information setting unit
A1 Inputted image
P Registered people information
R Registered image

## Claims

1. An image authentication apparatus that authenticates an object photographed in an inputted image by checking the inputted image in a registered image database,
a registered image obtained by photographing the object and a photographing condition relating to the object of the registered image being registered in the registered image database while correlated with each other, the image authentication apparatus comprising:
inputted image photographing condition acquisition means for acquiring the photographing condition relating to the object of the inputted image;
registered image photographing condition acquisition means for acquiring the photographing condition of the registered image stored in the registered image database;
weighting determination means for determining weighting corresponding to closeness between the photographing condition of the registered image and the photographing condition of the inputted image;
similarity calculation means for calculating a degree of similarity between the inputted image and the registered image;
weighting application means for applying the degree of similarity calculated by the similarity calculation means to the weighting determined with respect to the corresponding registered image; and
image authentication means for checking the inputted image based on the degree of similarity to which the weighting is applied.

2. The image authentication apparatus according to claim 1, wherein a plurality of registered images obtained by photographing the object are registered in the registered image database with respect to at least one object.

3. The image authentication apparatus according to claim 2, further comprising selection means for selecting the registered image to which the weighting should be applied from the plurality of registered images, which are registered with respect to each object according to photographing condition closeness that is of the closeness between the photographing condition of the registered image registered with respect to one object and the photographing condition of the registered image registered with respect to another object,
wherein the weighting application means applies the weighting to the degree of similarity that is calculated with respect to the registered image selected by the selection means.

4. The image authentication apparatus according to claim 3, wherein the selection means selects the identical number of registered images with respect to each object.

5. The image authentication apparatus according to claim 3 or 4, further comprising: photographing condition approximation determination means for determining whether the photographing condition of the registered image registered with respect to one object is approximate to the photographing condition of the registered image registered with respect to another object; and
photographing condition closeness calculation means for calculating the photographing condition closeness according to the number of times in each of which the photographing condition approximation determination means determines that the photographing condition of the registered image registered with respect to one object is approximate to the photographing condition of the registered image registered with respect to another object.

6. The image authentication apparatus according to claim 3 or 4, further comprising: registration condition ranking means for ranking the closeness between the photographing condition of the registered image registered with respect to one object is approximate to the photographing condition of the registered image registered with respect to another object; and
photographing condition closeness calculation means for calculating the photographing condition closeness according to the ranking performed by the registration condition ranking means.

7. The image authentication apparatus according to any one of claims 2 to 6, further comprising: input condition determination means for determining whether the photographing condition of the inputted image is approximate to the photographing condition of the registered image; and
closeness calculation means for calculating the closeness between the photographing condition of the inputted image and the photographing condition of the registered image according to the number of times in each of which the photographing condition of the inputted image is approximate to the photographing condition of the registered image,
wherein the weighting determination means determines the weighting according to the closeness calculated by the closeness calculation means.

8. The image authentication apparatus according to any one of claims 2 to 6, further comprising: input condition ranking means for ranking the closeness between the photographing condition of the inputted image and the photographing condition of the registered image; and
closeness calculation means for calculating the closeness between the photographing condition of the inputted image and the photographing condition of the registered image according to the ranking performed by the input condition ranking means,
wherein the weighting determination means determines the weighting according to the closeness calculated by the closeness calculation means.

9. The image authentication apparatus according to any one of claims 5 to 8, wherein the photographing condition of the registered image includes a plurality of conditions.

10. The image authentication apparatus according to any one of claims 1 to 9, wherein the object is a face of a person.

11. An image processing system comprising: the image authentication apparatus according to any one of claims 1 to 10; and
an image input apparatus that supplies the inputted image to the image authentication apparatus.

12. A control program for image authentication apparatus that authenticates an object photographed in an inputted image by checking the inputted image in a registered image database, the control program for image authentication apparatus causes a computer to execute pieces of processing including:
an inputted image photographing condition acquisition step of acquiring the photographing condition relating to the object of the inputted image;
a registered image photographing condition acquisition step of acquiring the photographing condition of the registered image by referring to the registered image database, in which a registered image obtained by photographing the object and a photographing condition with respect to the object of the registered image are stored while correlated with each other;
a weighting step of determining weighting corresponding to closeness between the photographing condition of the registered image and the photographing condition of the inputted image;
a similarity calculation step of calculating a degree of similarity between the inputted image and the registered image;
a weighting application step of applying the degree of similarity calculated by the similarity calculation means to the weighting determined with respect to the corresponding registered image; and
an image authentication step of checking the inputted image based on the degree of similarity to which the weighting is applied.

13. A computer-readable recording medium in which the control program for image authentication apparatus according to claim 12 is recorded.

14. An image authentication method for authenticating an object photographed in an inputted image by checking the inputted image in a registered image database, the image authentication method comprising:
an inputted image photographing condition acquisition step of acquiring the photographing condition relating to the object of the inputted image;
a registered image photographing condition acquisition step of acquiring the photographing condition of the registered image by referring to the registered image database, in which a registered image obtained by photographing the object and a photographing condition with respect to the object of the registered image are stored while correlated with each other;
a weighting step of determining weighting corresponding to closeness between the photographing condition of the registered image and the photographing condition of the inputted image;
a similarity calculation step of calculating a degree of similarity between the inputted image and the registered image;
a weighting application step of applying the degree of similarity calculated by the similarity calculation step to the weighting determined with respect to the corresponding registered image; and
an image authentication step of checking the inputted image based on the degree of similarity to which the weighting is applied.
